(19) Europäisches Patentamt
European Patent Office
Office européen des brevets

(11) EP 2 167 444 B1

(12) **EUROPÄISCHE PATENTSCHRIFT**

(45) Veröffentlichungstag und Bekanntmachung des Hinweises auf die Patenterteilung:
**05.03.2014 Patentblatt 2014/10**

(21) Anmeldenummer: **08749773.1**

(22) Anmeldetag: **28.04.2008**

(51) Int Cl.:
***C04B 24/16*** *(2006.01)* ***C04B 24/26*** *(2006.01)*
***C04B 28/14*** *(2006.01)* ***C04B 40/06*** *(2006.01)*
***C08F 220/56*** *(2006.01)* ***C04B 103/46*** *(2006.01)*

(86) Internationale Anmeldenummer:
**PCT/EP2008/055140**

(87) Internationale Veröffentlichungsnummer:
**WO 2008/151879 (18.12.2008 Gazette 2008/51)**

(54) **BAUSTOFFTROCKENMISCHUNGEN BASIEREND AUF CALCIUMSULFAT**

DRY CONSTRUCTION MATERIAL MIXTURES BASED ON CALCIUM SULFATE

MÉLANGES SECS DE MATÉRIAUX DE CONSTRUCTION À BASE DE SULFATE DE CALCIUM

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **14.06.2007 DE 102007027477**

(43) Veröffentlichungstag der Anmeldung:
**31.03.2010 Patentblatt 2010/13**

(73) Patentinhaber: **Construction Research & Technology GmbH**
**83308 Trostberg (DE)**

(72) Erfinder:
- **GAEBERLEIN, Peter**
  **39104 Magdeburg (DE)**
- **SCHINABECK, Michael**
  **83352 Altenmarkt (DE)**
- **FRIEDRICH, Stefan**
  **84518 Garching (DE)**
- **HERTH, Gregor**
  **83308 Trostberg (DE)**

(56) Entgegenhaltungen:
**EP-A- 0 936 228** **EP-A1- 0 303 071**
**WO-A-02/10229** **WO-A-2005/035603**
**WO-A-2005/090424** **WO-A-2006/002936**
**WO-A-2007/017286** **DE-A1- 4 331 141**
**DE-A1-102006 007 004** **GB-A- 2 329 895**
**US-A- 5 075 399** **US-A1- 2005 241 541**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 167 444 B1

Printed by Jouve, 75001 PARIS (FR)

## Beschreibung

Die vorliegende Erfindung betrifft auf Calciumsulfat basierende Baustofftrockenmischungen und deren Verwendung.

In "R. Bayer, H. Lutz, Dry Mortars, Ullmann's Encyclopedia of Industrial Chemistry, 6th ed., vol. 11, Wiley-VCH, Weinheim, (2003), 83-108" wird ein Überblick über die Anwendungen und Zusammensetzung von Trockenmörteln, wie Binder, Aggregate und verschiedene Zusätze gegeben. Trockenmischungen, welche auf Calciumsulfat als Bindemittel basieren, sind neben zementären Trockenmischungen gebräuchlich. Wie beispielsweise betreffend Fugenfüller für Gipsplatten in der DE-A-4331141 beschrieben, kommen Zusätze wie redispergierbare Polymerpulver und/oder Celluloseether in diesen Gipssystemen zur Verbesserung der Verarbeitungseigenschaften, insbesondere der Standfestigkeit zum Einsatz. Allerdings sind diese Zusätze, insbesondere die redispergierbaren Polymerpulver sehr kostenintensiv. Der Einsatz von Superabsorbern in Baustoffmischungen ist ebenfalls bekannt. Zum Beispiel wird in der US-A-2003144386 der Einsatz von Superabsorbern in zementösen Systemen zur Steigerung der Festigkeitsentwicklung beschrieben und daneben auch ein möglicher Einsatz in Gipsbaustoffmischungen erwähnt. In der US-B-6187887 sind wasserlösliche oder wasserquellbare sulfogruppenhaltige Copolymere beschrieben, welche zur Steigerung der Wasserretention in Baustoffsystemen eingesetzt werden. Diese Copolymere unterscheiden sich durch ihre Wasserlöslichkeit von den im Wesentlichen unlöslichen Superabsorbern und durch die fehlende, bzw. sehr geringe Wasseraufnahmekapazität.

Die Offennlegungsschrift EP 0 303 071 A1 bezeiht sich auf die Verwendung von Kalziumsulfathalbhydrat zum Verspachteln von Fugen, die durch das Aneinanderstoßen zweiter Kanten von Gipskartonplatten entstehen. Hierbei soll er Fugenfüller die Fuge so ausfüllen, dass sie in der fertiggestellten Wand nicht mehr sichtbar ist, dass sie dauerhaft ist, eine gewisse Festigkeit einerseits, aber auch eine bestimmte Elastizität andererseits aufweist nicht heißt, vorzugsweise ohne Papier oder Vliesstreifen als Bewehrungseinlage auskommt und eine Nacharbeitbarkeit gestattet. Die Aufgabe der EP 0 303 071 A1 bezieht sich auf das spezielle Gebiet des Verfugens von Gipskartonplatten und wurde gelöst durch einen Fugenfüller, der aus einem redispergierbaren feinteiligen Vinylazetat-Ethylen-Kopolymer in Kombination mit $CaSO_4$ - Halbhydrat, der im wesentlichen β-Gips, etwa im Verhältnis 1 ; 2, zur Steuerung der Abbindezeit und weiteren Zusätzen zur Haftvermittlung, zur Armierung sowie zu Konsistenzregelung sowie einem Restanteil an Füllstoffen, besteht.

Die in den vorstehend genannten Schriften offenbarten Technologien sind bezüglich ihrer Wirtschaftlichkeit noch verbesserungswürdig. Die erwünschten wirtschaftlich vorteilhaften Trockenmischungen sollen gute, bzw. verbesserte Produkteigenschaften sowohl im frischen, als auch im erhärteten Zustand aufweisen.

Der vorliegenden Erfindung lag somit die Aufgabe zugrunde, wirtschaftliche und qualitativ gute Trockenmischungen zur Herstellung von wässrigen Baustoffsystemen bereitzustellen.

Die Lösung dieser Aufgabe ist eine Trockenmischung, bevorzugt ein Fugenfüller für Gipsplatten, dadurch gekennzeichnet, dass diese enthält

a) 10 bis 98 Gewichtsprozent eines auf Calciumsulfat basierenden Bindemittels,

b) 0,5 bis 7 Gewichtsprozent eines redispergierbaren Polymerpulvers,

c) 0,1 bis 1,5 Gewichtsprozent eines auf Polysaccharidstrukturen basierenden Wasserretentionsmittels, welches bevorzugt wasserlöslich ist und bevorzugt ausgewählt ist aus der Gruppe der Celluloseether, Stärkeether und mikrobiell erzeugter oder natürlich vorkommender Polysaccharide,

d) 0,01 bis 2,0 Gewichtsprozent eines Abbindeverzögerers und entweder

ea) 0,02 bis 2,0 Gewichtsprozent anionisches, bevorzugt mit Wasser oder Salzlösungen quellbares und besonders bevorzugt wasserunlösliches, pulverförmiges Copolymer, welches bevorzugt aus radikalischer Polymerisation ethylenisch ungesättigter Vinylverbindungen herstellbar ist und dessen gemäß der Norm edana 420.2-02 bestimmte Partikelgrößenverteilung bevorzugt so beschaffen ist, dass mehr als 98 Gewichtsprozent ein Sieb der Maschengröße 200 μm passieren, wobei das Copolymer aufweist

$e_a$-i) 10 bis 60 Molprozent sulfonsäuregruppenhaltige Struktureinheiten der allgemeinen Formel (I)
worin

$R^1$ gleich oder verschieden ist und durch Wasserstoff und/oder einen Methylrest repräsentiert wird,

$R^2$, $R^3$, $R^4$ jeweils gleich oder verschieden sind und unabhängig voneinander jeweils durch Wasserstoff, einen aliphatischen, verzweigten oder unverzweigten Kohlenwasserstoffrest mit 1 bis 6 C-Atomen und/oder aromatischen Kohlenwasserstoffrest mit 6 bis 14 C-Atomen repräsentiert werden,

M gleich oder verschieden ist und durch Wasserstoff, ein ein- oder zweiwertiges Metallkation und/oder ein Ammoniumion repräsentiert wird,

a gleich oder verschieden ist und durch 1/2 und/oder 1 repräsentiert wird,

$e_a$-ii) 30 bis 85 Molprozent (meth)acrylamidogruppenhaltige Struktureinheiten der allgemeinen Formeln (II)

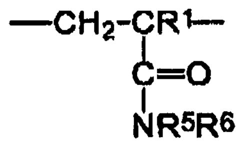

worin

$R^1$ die vorstehend genannte Bedeutung hat,

$R^5$ und $R^6$ jeweils gleich oder verschieden sind und unabhängig voneinander je-weils durch Wasserstoff, einen verzweigten oder unverzweigten alipha-tischen Kohlenwasserstoffrest mit 1 bis 20 C-Atomen, einen cyc-loaliphatischen Kohlenwasserstoffrest mit 5 bis 8 C-Atomen und/odereinen Arylrest mit 6 bis 14 C-Atomen repräsentiert wird,

$e_a$-iii) 0,03 bis 1 Molprozent Struktureinheiten, die sich von bevorzugt wasserlöslichen Monomerverbindungen ableiten, die mehr als eine radikalisch polymerisierbare, ethylenisch ungesättigte Vinylgruppe aufweisen, oder alternativ zu $e_a$)

$e_b$) 0,02 bis 2,0 Gewichtsprozent kationisches, bevorzugt mit Wasser oder Salzlösungen quellbares und besonders bevorzugt wasserunlösliches, pulverförmiges Copolymer, welches bevorzugt aus radikalischer Polymerisation ethylenisch ungesättigter Vinylverbindungen herstellbar ist und dessen gemäß der Norm edana 420.2-02 bestimmte Partikelgrößenverteilung bevorzugt so beschaffen ist, dass mehr als 98 Gewichtsprozent ein Sieb der Maschengröße 200 $\mu$m passieren, wobei das Copolymer aufweist

$e_b$-i) 10 bis 60 Molprozent kationische, ein quaterniertes Stickstoffatom aufweisende Struktureinheiten der allgemeinen Formel (III)

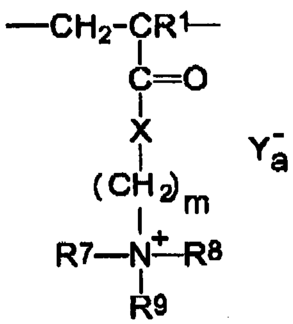

worin

$R^1$ die vorstehend genannte Bedeutung hat,

$R^7$, $R^8$, $R^9$, $R^{10}$ jeweils gleich oder verschieden sind und unabhängig voneinanderjeweils durch Wasserstoff, einen verzweigten oder unverzweigtenaliphatischen Kohlenwasserstoffrest mit 1 bis 20 C-Atomen, einencycloaliphatischen Kohlenwasserstoffrest mit 5 bis 8 C-Atomenund/oder einen Arylrest mit 6 bis 14 C-Atomen, repräsentiert wer-den,

m gleich oder verschieden ist und durch eine ganze Zahl von 1 bis 6 repräsentiert wird,

X gleich oder verschieden ist und durch Sauerstoff und/oder N-$R^{10}$ repräsentiert wird,

$Y^-_a$ gleich oder verschieden ist und durch ein Halogenid, $C_1$-bis $C_4$Alkylsulfat, $C_1$-bis $C_4$-Alkylsulfonat und/oder Sulfat, repräsentiert wird,

a gleich oder verschieden ist und durch 1/2 und/oder 1 repräsentiert wird,

$e_b$-ii) 30 bis 85 Molprozent (meth)acrylamidogruppenhaltige Struktureinheiten der allgemeinen Formel (II)

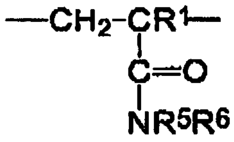

worin

$R^1$ die vorstehend genannte Bedeutung hat,
$R^5$ und $R^6$ jeweils die vorstehend genannten Bedeutungen haben,

$e_b$-iii) 0,03 bis 1 Molprozent Struktureinheiten, die sich von bevorzugt wasserlöslichen Monomerverbindungen ableiten, die mehr als eine radikalisch polymerisierbare, ethylenisch ungesättigte Vinylgruppe aufweisen.

Die Anforderungen an moderne, auf Gips basierende Baustofftrockenmischungen, besonders im Bereich von Fugenfüllern für Gipsplatten, aber auch von Spachtelmassen und Gipsputzen, sind sowohl bezüglich ihrer Eigenschaften im noch nicht ausgehärteten Zustand (rheologische Verabeitungseigenschaften wie thixotropes Verhalten und Wasserretention) als auch im ausgehärteten Zustand (Abriebbeständigkeit, Kratzfestigkeit, Fugenfestigkeit und Durchbiegung) sehr hoch. In der DE-A-4331141 wird die Verbesserung von Verarbeitungseigenschaften wie die Standfestigkeit von Fugenfüllern, durch Zusätze wie Celluloseether und redispergierbare Polymerpulver beschrieben. Allerdings sind die genannten Zusätze, besonders die Dispersionspulver, im Vergleich zu den anderen Trockenmischungskomponenten sehr kostenintensiv. Eine weitere Verbesserung der Fugenfestigkeit und Durchbiegung von Fugenfüllern ist ebenfalls wünschenswert.
Es besteht auch die Notwendigkeit die Abbindegeschwindigkeit durch Abbindeverzögerer zu verringern, da Bindemittel wie insbesondere α-Calciumsulfathalbhydrat und βCalciumsulfathalbhydrat im Allgemeinen im Minutenbereich abbinden und damit die Verarbeitungszeit zu kurz ist.
Als technische Aufgabe leitet sich hieraus ab, durch geeignete Maßnahmen die Wirtschaftlichkeit der Trockenmörtel zu steigern, ohne eine Qualitätsminderung der Baustosprodukte hinnehmen zu müssen. Eigenschaften wie die Fugenfestigkeit und die Durchbiegung von Fugenfüllern sollen ebenfalls verbessert werden.
Die Lösung dieser Aufgabe erfolgt durch die Verwendung der erfindungsgemäßen Trockenmischungen, welche ein zur Steigerung der Toleranz gegenüber erhöhten Wasser / Bindemittel Verhältnissen geeignetes, superabsorbierendes pulverförmiges Copolymer (Superabsorber) enthalten. Die Polymerchemie des Superabsorbers wurde dabei erfindungsgemäß so angepasst, dass eine hohe Wasseraufnahmekapazität auch in calciumionenhaltigen wässrigen Systemen gewährleistet ist. Überraschenderweise wurde gefunden, dass dabei nicht nur die vorstehend genannten Anforderungen an die Produkteigenschaften eingehalten oder verbessert werden können, sondern darüber hinaus auch noch teure Formulierungsbestandteile wie die redispergierbaren Dispersionspulver beträchtlich reduziert werden können.
Zur Begriffsbestimmung soll noch angefügt werden, dass Trockenmischungen häufig in der Literatur auch als Trockenmörtel bezeichnet werden.

**Detaillierte Beschreibung der Erfindung**

a) Das auf Calciumsulfat basierende Bindemittel kann in verschiedenen Hydratstufen vorliegen. Als erfindungsgemäße Bindemittel sind α-Calciumsulfathalbhydrat, β-Calciumsulfathalbhydrat und das kristallwasserfreie Anhydrit, bzw. Mischungen der genannten Bindemittel bevorzugt. Besonders bevorzugt sind α-Calciumsulfathalbhydrat und β-Calciumsulfathalbhydrat. Auch kann Anhydritstaub (feingemahlenes Anhydrit) zum Einsatz kommen, welches relativ reaktionsträge ist und nur teilweise abbindet.
Um die Halbhydratformen herzustellen wird Gips ($CaSO_4 \cdot 2\,H_2O$) unter Abspaltung von Wasser calciniert. Je nach Calcinierungsgemthode wird das α-Halbhydrat oder das β-Halbhydrat erhalten. Bei der raschen Erhitzung in offenen Anlagen entsteht das β-Halbhydrat, wobei das Wasser sehr schnell entweicht und Hohlräume hinterlässt. Das α-Halbhydrat bildet sich bei der Entwässerung in geschlossenen Autkolaven, die Kristallform ist relativ dicht und der Wasseranspruch für das Bindemittel α-Halbhydrat deutlich geringer, Calciumsulfat kann auch als Nebenprodukt bestimmter technischer Prozesse wie der Rauchgasentschwefelung anfallen.
Die vorstehend genannten auf Calciumsulfat basierenden Bindemittel werden bei Wasserzugabe hydratisiert, wobei

Calciumsulfatdihydrat (Gips) entsteht Calciumsulfatdihydrat bildet nadelförmige Kristalle aus, welche ineinander wachsen und aneinander haften. Dadurch können Gipsprodukte von ausgeprägter Härte und Druckfestigkeit erhalten werden. Der Gewichtsanteil des auf Calciumsulfat basierenden hydraulischen Bindemittels in der Trockenmischung beträgt je nach Anwendung von 10 bis 98 Gew. %, bevorzugt ist ein Gewichtsanteil von 20 bis 90 Gew. %, besonders bevorzugt ist ein Gewichtsanteil von 50 bis 80 Gew, %.

b) Als redispergierbare Polymerpulver werden (Co)polymere bezeichnet, die als wasserbasierte Dispersion durch einschlägige Polymerisationsverfahren wie zum Beispiel Emulsionspolymerisationsverfahren erhältlich sind und in einem weiteren Schritt durch geeignete Trocknungsmaßnahmen wie zum Beispiel Sprühtrockung in ein Polymerpulver überführt werden. Beim Einmischen in Wasser oder wässrige Systeme entsteht aus dem redispergierbaren Polymerpulver wieder eine wasserbasierte Dispersion, daher die Bezeichnung als redispergierbares Polymerpulver. Durch die Verwendung der redispergierbaren Dispersionspulver in wässrigen Baustoffmischungen lassen sich vor allem im ausgehärteten Zustand wichtige Produkteigenschaften wie unter anderem Abriebbeständigkeit, Kratzfestigkeit, Biegezugfestigkeit und Oberflächenhaftung auf verschiedenen Substraten verbessern. Bei Fugenfüllern für Gipsplatten sind beispielsweise die Verbesserung der Fugenfestigkeit und der Durchbiegung zu erwähnen. Redispergierbare Polymerpulver wirken bekanntlich in der mit Wasser angerührten Baustoffmischung im Wesentlichen als organische Binder, wobei dieser Effekt hauptsächlich auf einer durch Verdunstung von Wasser geförderten Polymerfilmbildung aus den Primärpartikeln basiert.

Geeignet sind (Co)polymere auf der Basis von einem oder mehreren ethylenisch ungesättigten Monomeren, welche jeweils aus einer oder mehreren der folgenden Monomergruppen ausgewählt werden können: Vinylaromaten, Vinylester von verzweigten oder unverzweigten Alkylcarbonsäuren mit 1 bis 15 C-Atomen, Diene, (Meth)acrylsäureestern von verzweigten oder unverzweigten Alkoholen mit 1 bis 10 C-Atomen, Vinylhalogenide und Olefine. Die Monomere sollten dabei bevorzugt hydrophoben Charakters sein.
Beispiele für bevorzugte Monomere, die unter die Gruppe der Vinylaromaten fallen sind Styrol, Vinyltoluol und $\alpha$-Methylstyrol. Als bevorzugte Vinylester von verzweigten oder unverzweigten Alkylcarbonsäuren mit 1 bis 15 C-Atomen sind Vinylacetat, Vinylpropionat, Vinylbutyrat, Vinyl-2-Ethylhexanoat, 1-Methylvinylacetat, Vinyllaurat und Vinylester von in alpha-Stellung zur Säuregruppe ein tertiäres C-Atom aufweisenden Monocarbonsäuren mit 5 bis 11 C-Atomen (Vinylversatate), beispielsweise VeoVa5® (Vinylpivalat), VeoVa9®, VeoVa10® und VeoVa11® (Handelsnamen der Firma Shell) zu nennen, wobei Vinylacetat und die vorstehend genannten Vinylversatate besonders bevorzugt sind. Als Diene sind bevorzugt 1,3-Butadien und Isopren geeignet, als (Meth)acrylsäureester von verzweigten oder unverzweigten Alkoholen mit 1 bis 10 C-Atomen bevorzugt Methyl(meth)acrylat, Ethyl(meth)acrylat, Propyl(meth)acrylat, n-Butyl(meth)acrylat und 2-Ethythoxylacrylat.
Bevorzugte Olefine sind Ethylen, Propylen, 1-Buten und 2-Methylpropen, besonders bevorzugt ist Ethylen. Die bevorzugten Vinylhalogenidmonomere sind Vinylchlorid und Vinylidenchlorid.
Als redispergierbare Polymerpulver geeignete (Co)polymere sind die nachfolgend aufgeführten Typen bevorzugt, wobei die sich auf die jeweiligen Monomere beziehenden Angaben in Gew. % des (Co)polymers zu verstehen sind und sich gegebenenfalls mit weiteren Monomereinheiten zu 100 Gew. % aufaddieren:
Aus der Gruppe der Polymerisate von Alkylcarbonsäurevinylestern sind bevorzugt Vinylacetat Polymere, welche gegebenenfalls teilhydrolysiert sein können; Vinylacetat-Ethylen Copolymere mit einem Ethylengehalt von 1 bis 60 Gew. %; Vinylacetat Copolymere mit 1 bis 50 Gew. % eines oder mehrerer, weiterer Vinylestermonomere wie Vinyllaurat, Vinylpivalat und insbesondere VeoVa9®, VeoVa10® und VeoVa11® (Handelsnamen der Firma Shell), wobei diese Copolymere noch als weiteres Monomer 1 bis 40 Gew. % Ethylen enthalten können; vinylester-Ethylen-Vinylchlorid Copolymere mit einem Ethylengehalt von 1 bis 40 Gew. % und einem Vinylchloridgehalt von 20 bis 90 Gew. % (als Vinylester sind zum Beispiel Vinylacetat, Vinylpropionat, Vinylbutyrat, Vinyl-2-Ethylhexanoat, 1-Methylvinylacetat, Vinyllaurat und Vinylester von in alpha-Stellung zur Säuregruppe ein tertiäres C-Atom aufweisenden Monocarbonsauren mit 5 bis 11 C-Atomen (Vinylversatate), beispielsweise VeoVa5® (Vinylpivalat), VeoVa9®, VeoVa10® und VeoVa11® (Handelsnamen der Firma Shell) möglich); Vinylacetat-Acrylsäureester-Copolymerisate mit 1 bis 60 Gew. % Acrylsäureester, bevorzugt n-Butylacrylat, welche noch 1 bis 40 Gew. % Ethylen enthalten können.
Aus der Gruppe der (Meth)acrylsäureesterpolymere sind bevorzugt Copolymere aus den Monomereinheiten n-Butylacrylat und/oder 2-Ethylhexylacrylat; Copolymere von Methylmethacrylat mit n-Butylacrylat und/oder 2-Ethylhexylacrylat und Copolymere von Methylmethacrylat mit 1,3- Butadien.
Aus der Gruppe der Vinylhalogenid Copolymere sind neben den vorstehend genannten Vinylester-Ethylen-Vinylchlorid Copolymeren, Vinylchlorid-Ethylen Copolymere und Vinylchlorid-Acrylat Copolymere bevorzugt.
Aus der Gruppe der Vinylaromat Copolymere sind bevorzugt Styrol - Butadien Copolymere und Styrol - Acrylsäureester Copolymere wie Styrol- n-Butylacrylat oder Styrol - 2-Ethylhexylacrylat mit einem Styrolgehalt von jeweils 10 bis 70 Gew. %.
In einer weiteren Ausführungsform besonders bevorzugt sind Vinylacetat Polymere, Vinylacetat-Ethylen Copolymere

mit einem Ethylengehalt von 1 bis 60 Gew. %, Vinylacetat Copolymere mit 1 bis 50 Gew. % eines oder mehrerer, weiterer Vinylestermonomere wie Vinyllaurat, Vinylpivalat und insbesondere Vinylversatate, wie beispielsweise VeoVa9®, VeoVa10® und VeoVa11® (Handelsnamen der Firma Shell), wobei diese Copolymere noch als weiteres Monomer 1 bis 40 Gew. % Ethylen enthalten können. Besonders bevorzugt sind auch Vinylacetat-Acrylsäureester-Copolymere mit 1 bis 60 Gew. % Acrylsäureester, bevorzugt n-Butylacrylat, welche noch 1 bis 40 Gew. % Ethylen enthalten können. Weiterhin sind besonders bevorzugt Styrol - Butadien Copolymere und Styrol - Acrylsaureester Copolymere, wie Styrol-n-Butylacrylat oder Styrol - 2-Ethylhexylacrylat mit einem Sollgehalt von jeweils 10 bis 70 Gew. %.

Das redispergierbare Polymerpulver b) liegt insbesondere bevorzugt vor als Vinylacetat Polymer, Vinylacetat-Ethylen Copolymer, Vinylacetat-Vinylester Copolymer und/oder Vinylacetat-Vinylester-Ethylen Copolymer, wobei jeweils die Vinylestermonomere ausgewählt sind aus der Gruppe Vinyllaurat, Vinylpivalat und Vinylversatate, weiterhin als Vinylacetat-Acrylsäureester-Copolymer, Vinylacetat-Acrylsäureester-Ethylen Copolymer, Styrol-Butadien Copolymer und Styrol-Acrylsäureester Copolymer, wobei jeweils die Acrylsäureester Ester mit verzweigten oder unverzweigten Alkoholen mit 1 bis 10 C-Atomen darstellen.

Gegebenenfalls können die (Co)polymere noch funktionelle Comonomereinheiten in einer Menge von 0,1 bis 10 Gew. %, bezogen auf das Gesamtgewicht des Polymerisats, enthalten. Diese funktionellen Comonomereinheiten können ausgewählt sein aus der Gruppe der Mono- oder Dicarbonsäuren, wie zum Beispiel (Meth)acrylsäure und/oder Maleinsäure; der Gruppe der ethylenisch ungesättigten Carbonsäureamide wie zum Beispiel (Meth)acrylamid; aus der Gruppe der ethylenisch ungesättigten Sulfonsäuren beziehungsweise deren Salzen, vorzugsweise Vinylsulfonsäure und/oder Styrolsulfonsäure; aus der Gruppe der mehrfach ethylenisch ungesättigten Comonomere, beispielsweise Divinyladipat, Triallylisocyanurat, Diallylmaleat und/oder Allylmethacrylat. Der Anteil (meth)acrylamidogruppenhaltiger Struktureinheiten in den redispergierbaren Polymerpulvern gemäß der allgemeinen Formel II beträgt bevorzugt weniger als 25 Molprozent. Die (Co)polymerisation erfolgt nach in der Technik einschlägig bekannten Verfahren wie dem Emulsionspolymerisationsverfahren. Die erhaltenen Dispersionen können sowohl mit einem Emulgator stabilisiert werden, als auch mit einem Schutzkolloid wie zum Beispiel Polyvinylalkohol. Um die redispergierbaren Polymerpulver zu erhalten wird eine Trocknung vorgenommen, wobei die Trocknung durch übliche Verfahren wie Sprühtrocknung, Gefriertrocknung, Koagulation der Dispersion und anschliessende Wirbelschichttrocknung erfolgen kann. Das bevorzugte Verfahren ist die Sprühtrocknung. Die redispergierbaren Polymerpulver sind in der auf Calciumsulfat basierenden Trockenmischung von 0,5 bis 7 Gew. %, bevorzugt von 0,8 bis 5 Gew. % und besonders bevorzugt von 1,0 bis 3 Gew. % enthalten.

c) Die auf Polysaccharidstrukturen basierenden, bevorzugt wasserlöslichen Wasserretentionsmittel dienen neben der Wasserrückhaltung auch zur Einstellung von rheologischen Eigenschaften der entsprechenden Baustoffmischungen, beispielsweise der Viskosität und / oder der Thixotropie. In auf Calciumsulfat als Bindemittel basierenden Systemen wird neben der Wasserretention insbesondere die Standfestigkeit in Fugenfulleranwendungen verbessert. Eine gute Standfestigkeit ist insbesondere erforderlich um ein Absacken des Fugenfüllers in der Fuge zu verhindern. Bevorzugt sind Celluloseether, beispielsweise Alkylcellulosen wie Methylcellulose, Ethylcellulose, Propylcellulose und Methylethylcellulose, Hydroxyalkylcellulosen wie Hydroxyethylcellulose (HEC), Hydroxypropylcellulose (HPC) und Hydroxyethylhydroxypropylcellulose, Alkylhydroxyalkylcellulosen wie Methylhydroxyethylcelluose (MHEC), Methylhydroxypropylcelluose (MHPC) und Propylhydroxypropylcellulose. Bevorzugt sind die Celluloseetherderivate Methylcellulose (MC), Hydroxypropylcellulose (HFC), Hydroxyethylcellulose (HEC) und Ethylhydroxyethylcellulose (EHEC), besonders bevorzugt sind Methylhydroxyethylcelluose (MHEC) und Methylhydroxypropylcelluose (MHPC). Die vorstehend genannten Celluloseetherderivate, welche jeweils durch eine entsprechende Alkylierung oder Alkoxylierung von Cellulose erhältlich sind, liegen bevorzugt als nichtionische Strukturen vor. Carboxymethylcellulose (CMC) dagegen ist beispielsweise weniger geeignet, da die Carbonsäuregruppen durch Wechselwirkung mit Calciumionen die Löslichkeit der Carboxymethylcellulose herabsetzen und damit deren Wirksamkeit. Daneben kommen auch bevorzugt nichtionische Stärkeetherderivate zum Einsatz, wie zum Beispiel Hydroxypropylstärke, Hydroxyethylstärke und Methylhydroxypropylstärke. Bevorzugt ist die Hydroxypropylstärke. Die Stärkeetherderivate liegen in der Trockenmischung entweder alleine, bevorzugt aber in Kombination mit einem oder mehreren der vorstehend genannten Celluloseetherderivate vor, besonders bevorzugt liegen sie zusammen mit Methylhydroxyethylcelluose (MHEC) und/oder Methylhydroxypropylcelluose (MHPC) vor. Ebenfalls bevorzugt sind mikrobiell erzeugte Polysaccharide wie Welan Gum und/oder Xanthane und natürlich vorkommende Polysaccharide wie zum Beispiel Alginate, Carrageenane und Galactomannane. Diese können aus entsprechenden Naturprodukten durch extraktive Verfahren gewonnen werden, wie beispielsweise im Falle der Alginate und Carrageenane aus Algen, im Falle der Galactomannane von Johannisbrotbaumkemen. Die Auswahl der Wasserretentionsmittel und der eingesetzten Menge(n), erfolgt entsprechend den Anforderungen und wird durch entsprechende Routineversuche eingestellt. In der erfindungsgemäßen Trockenmischung können eines oder auch mehrere der vorstehend genannten Wasserretentionsmittel vorliegen.

In der hydraulisch abbindenden Trockenmischung liegen die auf Polysaccharidstrukturen basierenden Wasserrententionsmittel bezogen auf die Trockenmischung von 0,1 bis 1,5 Gew. % vor, bevorzugt von 0,2 bis 1,2 Gew. %,

besonders bevorzugt von 0,3 bis 1,0 Gew. %.

d) Im Gegensatz zu beispielsweise zementösen, hydraulisch abbindenden Systemen erfolgt besonders die Hydratisierung von $\alpha$-, als auch $\beta$-Gipshalbhydrat sehr rasch. Aus diesem Grund ist bei Verwendung von auf Calciumsulfat basierenden Bindemitteln die Verwendung von Abbindeverzögerern erforderlich.
Geeignete Abbindeverzögerer für auf Calciumsulfat basierende Bindemittel sind, wie in "R. Bayer, H. Lutz, Dry Mortars, Ullmann's Encyclopedia of Industrial Chemistry, 6th ed., vol.11, Wiley-VCH, Weinheim, (2003), 83-108" und "Franz Wirsching, Calcium sulfate, Ullmann's Encyclopedia of Industrial Chemitry, vol. 6, Wiley-VCH, Weinheim, (2003), 89-121" beschrieben, bevorzugt Fruchtsäuren bzw. deren Salze, wie zum Beispiel Zitronensäure, Zitrate, Weinsäure, Tartrate, Äpfelsäure und/oder Malate. Gluconsäure bzw. Gluconate und Calciumphosphat sind als Abbindeverzögerer ebenfalls geeignet. Geeignet sind ferner synthetische Aminosäurederivate, beispielsweise das Produkt Retardan® P der Firma Tricosal, Illertissen Deutschland. Es handelt sich dabei um das Calciumsalz einer Polyoxymethylen-Aminosäure. Als bevorzugte Abbindeverzögerer sind auch Abbau- und Hydrolyseprodukte von Proteinen, z.B. Aminosäuren zu nennen. Besonders bevorzugt sind Weinsteinsäure bzw. Tartrate und Zitronensäure bzw. Zitrate.
Die Abbindeverzögerer sind in der Trockenmischung von 0,01 bis 2,0 Gew. %, bevorzugt von 0,1 bis 1,5 Gew. % und besonders bevorzugt von 0,2 bis 1,0 Gew. % enthalten. Die vorstehend genannten Abbindeverzögerer können bei sehr hoher Dosierung im Verhältnis auf das Bindemittel einen negativen Effekt auf die Festigkeiten der Gipsprodukte haben, da die Entwicklung der Gipskristallstruktur beeinflusst wird. Dies kann beispielsweise der Fall sein wenn Zitronensäure in Dosierungen höher als 0,2 Gew. % bezogen auf das Bindemittel eingesetzt wird.

$e_a$) bzw. $e_b$)

Die mit Wasser oder wässrigen Salzlösungen quellbaren pulverförmigen Copolymere stellen vernetzte, hochmolekulare, entweder anionische oder kationische Polyelektrolyte dar, welche durch radikalische Polymerisation geeigneter, ethylenisch ungesättigter Vinylverbindungen und anschliessende Trocknungsmaßnahmen der erhaltenen Copolymere erhältlich sind. In der Technik spricht man üblicher Weise von Superabsorbierenden Polymeren (SAP) oder einfach Superabsorbern. Bei Kontakt mit Wasser oder wässrigen Systemen bildet sich unter Quellen und Wasseraufnahme ein Hydrogel aus, wobei ein Vielfaches des Gewichts des pulverförmigen Copolymers aufgenommen werden kann. Unter Hydrogelen versteht man Wasser enthaltende Gele auf der Basis hydrophiler, aber vernetzter wasserunlöslicher Polymere, die als dreidimensionale Netzwerke vorliegen. Das aus dem pulverförmigen, superabsorbierenden Copolymer durch Wasseraufnahme gebildete Hydrogel soll möglichst wenig in Wasser lösliche Anteile aufweisen, um die Rheologieeigenschaften der Baustoffmischungen nicht negativ zu beeinflussen. In vorliegender Erfindung ist es vorteilhaft solche Superabsorber zu verwenden, die auch bei hohen Salzkonzentrationen, insbesondere hohen Calciumionenkonzentrationen, ein hohes Wasserabsorptionsvermögen aufweisen.
Die erfindungsgemäßen pulverförmigen Copolymere (Superabsorber) liegen entweder als anionische oder kationische Polyelektrolyte und im Wesentlichen nicht als Polyampholyte vor. Unter Polyampholyten versteht man Polyelektrolyte, die sowohl kationische als auch anionische Ladungen an der Polymerkette tragen. Am meisten bevorzugt sind also Copolymere rein anionischer oder kationischer Natur. Allerdings können bis zu 10 Prozent, bevorzugt weniger als 5 Prozent der Gesamtladung eines Polyelektrolyten, durch entgegengesetzte Ladungsanteile ersetzt werden. Dies gilt sowohl für den Fall überwiegend anionischer Copolymere mit einem relativ kleinen kationischen Anteil, als auch umgekehrt für überwiegend kationische Copolymere mit einem relativ kleinen anionischen Anteil.
Im Folgenden sollen zunächst die anionischen superabsorbierenden Copolymere $e_a$) näher beschrieben werden. Als anionische Struktureinheiten sind sulfonsäuregruppenhaltige Struktureinheiten gemäß der allgemeinen Formel I enthalten. Sulfonsäuregruppenhaltige Monomere sind gegenüber carbonsäuregruppenhaltigen Monomeren bevorzugt, da sie in wässrigen Salzlösungen, besonders bei Anwesenheit von Calciumionen stabilere Hydrogele bilden, welche mehr Wasser aufnehmen können. Insbesondere sind die sulfonsäuregruppenhaltigen Superabsorber den hauptsächlich carbonsäuregruppenhaltigen Superabsorbern, wie solchen auf der Basis von vernetzter hochmolekularer Polyacrylsäure, bezüglich dieser Eigenschaft überlegen. Bevorzugt geht die der allgemeinen Formel I entsprechende sulfonsäuregruppenhaltige Struktureinheit aus der Copolymerisation von einer oder mehreren der Monomerspezies 2-Acrylamido-2-methylpropansulfonsäure, 2-Methacrylamido-2-methylpropansulfonsäure, 2-Acrylamidobutansulfonsäure, und/oder 2-Acrylamido-2,4,4-trimethylpentansulfonsäure, bzw. jeweils den Salzen der genannten Säuren hervor. Besonders bevorzugt sind 2-Acrylamido-2-methylpropansulfonsäure und deren Salzverbindungen. Die den Salzverbindungen der Säuren zugehörigen Kationen können dabei jeweils als ein- oder zweiwertige Metallkationen vorliegen, wie vorzugsweise Natrium-, Kalium-, Calcium- oder Magnesiumionen oder als Ammoniumionen, die sich sich ableiten von Ammoniak, primären, sekundären oder tertiären, $C_1$- bis $C_{20}$-Alkylaminen, $C_1$- bis $C_{20}$-Alkanolaminen, $C_5$- bis $C_8$-Cycloalkylaminen und $C_6$- bis $C_{14}$-Arylaminen. Die Alkylreste können jeweils verzweigt oder unverzweigt sein. Beispiele für entsprechende Amine sind Methylamin, Dimethylamin, Trimethylamin, Ethanolamin, Diethanolamin, Triethanolamin, Cyclohexylamin,

Dicyclohexylamin, Phenylamin sowie Diphenylamin, Bevorzugte Kationen sind Alkalimetallionen und/oder Ammoniumionen, besonders bevorzugt ist das Natriumion.
In den anionischen superabsorbierenden Copolymeren sind die sulfonsäuregruppenhaltigen Struktureinheiten von 10 bis 60 Molprozent, bevorzugt von 15 bis 60 und ganz besonders bevorzugt von 20 bis 50 Molprozent enthalten.

In den anionischen superabsorbierenden Copolymeren $e_a$) sind weiterhin (meth)acrylamidogruppenhaltige Struktureinheiten entsprechend der allgemeinen Formel II enthalten. Die (meth)acrylamidogruppenhaltigen Struktureinheiten sind in analoger Weise auch in den kationischen superabsorbierenden Copolymeren enthalten. Die nachfolgende Beschreibung soll sowohl für die anionischen als auch die kationischen superabsorbierenden Copolymere zutreffen. Beispielsweise gehen die Struktureinheiten aus der Copolymerisation von einer oder mehreren der Monomerspezies Acrylamid, Methacrylamid, N-Methylacrylamid, N-Methylmethacrylamid, N,N-Dimethylacrylamid, N-Ethylacrylamid, N, N-Diethylacrylamid, N-Cyclohexylacrylamid, N-Benzylacrylamid, N,N-Dimethylaminopropylacrylamid, N,N-Dimethylaminoethylacrylamid und/oder N-tertiär Butylacrylamid hervor. Bevorzugt sind Methylacrylamid, N,N-Dimethylacrylamid, und Methacrylamid, besonders bevorzugt ist Acrylamid. In den anionischen und auch in den kationischen superabsorbierenden Copolymeren sind die (meth)acrylamidogruppenhaltigen Struktureinheiten von 30 bis 85 Molprozent, bevorzugt von 40 bis 85 und ganz besonders bevorzugt von 50 bis 80 Molprozent enthalten.

Die Struktureinheiten des anionischen superabsorbierenden Copolymers, die sich von bevorzugt wasserlöslichen Monomerverbindungen ableiten, die mehr als eine radikalisch polymerisierbare, ethylenisch ungesättigte Vinylgruppe aufweisen, sollen in der weiteren Beschreibung als Vernetzermonomere bezeichnet werden. Sie sind in analoger Weise auch in den kationischen superabsorbierenden Copolymeren enthalten. Die nachfolgende Beschreibung der Vernetzermonomere soll sowohl für die anionischen als auch die kationischen superabsorbierenden Copolymere zutreffen.
Bevorzugt geht die den Vernetzermonomeren entsprechende Struktureinheit aus der Polymerisation von einer oder mehrerer der folgenden Monomerspezies hervor:
Mehrfach (meth)acrylfunktionelle Monomere, wie 1,4-Butandioldiacrylat, 1,4-Butandioldimethacrylat, 1,3-Butylenglykoldiacrylat, 1,3-Butylenglykoldimethacrylat, Diethylenglykoldiacrylat, Diethylenglykoldimethacrylat, Ethylenglykoldimethacrylat ethoxyliertes Bisphenol-A-diacrylat, ethoxyliertes Bisphenol-A-dimethacrylat, Ethylenglykoldimethacrylat, 1,6-Hexandioldiacrylat, 1,6-Hexandioldimethacrylat, Neopentylglykoldimethacrylat, Polyethylenglykoldiacrylat, Polyethylenglykoldimethacrylat, Triethylenglykoldiacrylat, Triethylenglykoldimethacrylat, Tripropylenglykoldiacrylat, Tetraethylenglykoldiacrylat, Tetraethylenglykoldiacrylat, Tetraethylenglykoldimethacrylat, Dipentaerythritpentaacrylat, Pentaerythrittetraacrylat, Pentaerythrittriacrylat, Trimethylolpropantriacrylat, Triethyloltrimethacrylat, Cyclopentadiendiacrylat, Tris(2-hydroxyethyl)isocyanurattriacrylat und/oder Tris(2-hydroxy)isocyanurattrimethacrylat; mehr als eine Vinylester-, bzw. Allylestergruppe mit entsprechende Carbonsäure aufweisende Monomere wie Divinylester von Polycarbonsäuren, Diallylester von Polycarbonsäuren, Triallylterephthalat, Diallylmaleat, Diallylfumarat, Trivinyltrimellitat, Divinyladipat und/oder Diallylsuccinat; mehr als eine (Meth)acrylamidogruppe aufweisende Monomere wie zum Beispiel N,N'-Methylenbisacrylamid und/oder N,N'-Methylenbismethacrylamid und mehr als eine Maleinimidgruppe aufweisende Monomere wie Hexamethylenbismaleinimid; mehr als eine Vinylethergruppe aufweisende Monomere wie Ethylenglykoldivinylether, Triethylenglykoldivinylether und/oder Cyclohexandioldivinylether. Auch können Allylamino- oder Allylammoniumverbindungen mit mehr als einer Allylgruppe, wie Triallylamin und/oder Tetraallylammoniumsalze eingesetzt werden. Aus der Gruppe der mehr als eine vinylaromatische Gruppe aufweisenden Monomere sei Divinylbenzol genannt.
Bei der Auswahl der entsprechenden, mehr als eine ethylenisch ungesättigte Vinylgruppe aufweisenden Monomere ist bevorzugt darauf zu achten, dass diese in wässrigen Systemen, eine gute Hydrolysebeständigkeit aufweisen. Aus diesem Grund sind die entsprechenden methacrylfunktionellen gegenüber den acrylfunktionellen Vernetzermonomeren bevorzugt, die (meth)acrylamidofunktionellen und die allylaminofunktionellen Monomere sind besonders bevorzugt. Beispiele für besonders bevorzugte Vernetzermonomere sind N,N'-Methylenbisacrylamid, N,N'-Methylenbismethacrylamid, Triallylisocyanurat, Triallylamin und/oder Tetraallylammoniumsalze, insbesondere bevorzugte Vernetzer sind N, N-Methylenbisacrylamid, N,N'-Methylenbismethacrylamid, Triallylisocyanurat und/oder Triallylamin. Es können jeweils eines oder mehrere der Vernetzermonomere in den Copolymeren vertreten sein. In den anionischen und kationischen superabsorbierenden Copolymeren sind die Vernetzermonomere von 0,03 bis 1 Molprozent, bevorzugt von 0,05 bis 0,7 Molprozent enthalten. Dabei soll die Menge der Vernetzermonomere mindestens so hoch gewählt werden, dass möglichst wasserunlösliche Copolymere, bzw. Copolymere mit einem geringen löslichen, bzw. einem geringen extrahierbaren Anteil, erhalten werden. Für den Fachmann ist dabei die Menge an Vernetzermonomeren durch Ausführung von Routineversuchen in einfacher Weise zu bestimmen. Die Vernetzung erfolgt im Laufe der Copolymerisationsreaktion, Die Vernetzung erfolgt im Laufe der Copolymerisationsrcaktion, zusätzlich kann auch im Anschluss an die Copolymerisationsreaktion eine Nachvernetzung, wie sie für Superabsorber in "F. Buchholz, A. Graham, Modern Superabsorber Technology, John Wiley & Sons Inc., 1989, 55-67" beschrieben ist, erfolgen.

Neben den vorstehend genannten, gemäß dem Hauptanspruch notwendigen drei Typen von Struktureinheiten der anionischen Copolymere können fakultativ noch von 1 bis 20 Molprozent weitere, bevorzugt hydrophile Struktureinheiten enthalten sein. Diese leiten sich vorzugsweise von neutralen oder anionischen, ethylenisch ungesättigten Monomeren ab. Für kationische Monomere gelten die vorstehend genannten Beschränkungen bezüglich der Mengenanteile im anionischen Copolymer, d.h. es können bis zu 10 Prozent, bevorzugt weniger als 5 Prozent der anionischen Ladungen durch kationische Ladungen ersetzt werden. Als neutrale Monomere sind beispielsweise möglich Acrylnitril, Methacrylnitril, Vinylpyridin, Vinylacetat und/oder hydroxygruppenhaltige (Meth)acrylsäureester wie zum Beispiel Hydroxyethylacrylsäure, Hydroxypropylacrylsäure und/oder Hydroxypropylmethacrylsaure.

Bevorzugt leiten sich die fakultativen Struktureinheiten von Monomeren ab, ausgewählt aus der Gruppe ethylenisch ungesättigter Carbonsäuren oder Dicarbonsäuren oder deren Anhydride wie zum Beispiel Methacrylsäure, Ethacrylsäure, $\alpha$-Chloracrylsäure, $\alpha$-Cyanoacrylsäure, $\beta$-Methylacrylsäure (Crotonsäure), $\alpha$-Phenylacrylsäure, $\beta$-Acryloxypropionsäure, Sorbinsäure, $\alpha$-Chlorsorbinsäure, 2'-Methylisocrotonsäure, Zimtsäure, Maleinsäure und Maleinsäureanhydrid, p-Chlorzimtsäure, $\beta$-Stearylsäure, Itaconsäure, Citraconsäure, Mesacronsäure, Glutaconsäure, Aconitsäure, Fumarsäure und/oder Tricarboxyethylen. Besonders bevorzugt leiten sich die weiteren Struktureinheiten von Acrylsäure und seinen Salzen und/oder ethylenisch ungesättigten Sulfonsäuremonomeren und jeweils ihren entsprechenden Salzen wie zum Beispiel Vinylsulfonsäure, Allylsulfonsäure, Styrolsulfonsäure, Sulfoethylacrylat, Sulfoethylmethacrylat, Sulfopropylacrylat, Sulfopropylmethacrylat und/oder 2-Hydroxy-3-methacryloxypropylsulfonsäure ab.

Im Folgenden sollen die kationischen superabsorbierenden Copolymere $e_b$) beschrieben werden. In den kationischen Copolymeren geht die der allgemeinen Formel III entsprechende, ein quaterniertes Stickstoffatom aufweisende Struktureinheit bevorzugt hervor aus der Polymerisation von einer oder mehrerer Monomerspezies ausgewählt aus der Gruppe der [2-(Acryloyloxy)-ethyl]-trimethylammoniumsalze, [2-(Methacryloyloxy)-ethyl]-trimethylammoniumsalze, [3-(Acryloylamino)-propyl]-trimethylammoniumsalze und /oder [3-(Methacryloylamino)-propyl]-trimethylammoniumsalze. Die genannten Salze liegen bevorzugt als Halogenide oder Methosulfate vor. Besonders bevorzugt sind [3-(Acryloylamino)-propyl]-trimethylammoniumsalze und /oder [3-(Methacryloylamino)-propyl]-trimethylammoniumsalze. Insbesondere bevorzugt sind [3-(Acryloylamino)-propyl]-trimethylammoniumchlorid (DIMAPA-Quat) und / oder [3-(Methacryloylamino)-propyl]-trimethylammoniumchlorid (MAPTAC).

In den kationischen superabsorbierenden Copolymeren ist die ein quaterniertes Stickstoffatom aufweisende Struktureinheit der allgemeinen Formel III von 10 bis 60 Molprozent, bevorzugt von 15 bis 60 und besonders bevorzugt von 20 bis 50 Molprozent enthalten.

Ebenso wie die anionischen superabsorbierenden Copolymere $e_a$) enthalten auch die kationischen superabsorbierenden Copolymere $e_b$) die gleichen (meth)acrylamidogruppenhaltige Struktureinheiten, gemäß der allgemeinen Formel II. Die Struktureinheiten nach allgemeiner Formel II wurden vorstehend schon näher bei den anionischen Copolymeren beschrieben, auf diese Beschreibung wird hiermit verwiesen und sie soll an dieser Stelle als eingefügt gelten. Auch die Struktureinheiten, die sich von bevorzugt wasserlöslichen Monomerverbindungen ableiten, die mehr als eine radikalisch polymerisierbare, ethylenisch ungesättigte Vinylgruppe aufweisen (Vernetzermonomere), sind ebenso im kationischen als auch im anionischen superabsorbierenden Copolymer enthalten. Diese Struktureinheit wurde ebenfalls vorstehend näher bei den anionischen superabsorbierenden Copolymeren beschrieben. Auf diese Beschreibung wird hiermit ebenfalls verwiesen und sie soll an dieser Stelle als eingefügt gelten.

Neben den vorstehend genannten, gemäß dem Hauptanspruch notwendigen drei Typen von Struktureinheiten der kationischen Copolymere können fakultativ noch von 1 bis 20 Molprozent weitere, bevorzugt hydrophile Struktureinheiten enthalten sein. Diese leiten sich vorzugsweise von neutralen oder auch kationischen, ethylenisch ungesättigten Monomeren ab. Für anionische Monomere gelten die vorstehend genannten Beschränkungen bezüglich der Mengenanteile im kationischen Copolymer, d.h. es können bis zu 10 Prozent, bevorzugt weniger als 5 Prozent der kationischen Ladungen durch anionische Ladungen ersetzt werden. Als neutrale Monomere sind beispielsweise möglich Acrylnitril, Methacrylnitril, Vinylpyridin, Vinylacetat und/oder hydroxygruppenhaltige (Meth)acrylsäureester wie zum Beispiel Hydroxyethylacrylsäure, Hydroxypropylacrylsäure und/oder Hydroxypropylmethacrylsäure. Als kationische Monomere sind beispielsweise N,N-Dimethyl-diallyl-ammoniumchhlorid und N,N-Diethyl-diallyl-ammoniumchlorid geeignet.

In einer besonders bevorzugten Ausführungsform des anionischen superabsorbierenden Copolymers $e_a$) sind Struktureinheiten enthalten, die sich von 20 bis 50 Molprozent 2-Acrylamido-2-methylpropansulfonsäure (entspr. Struktureinheit I), 50 bis 80 Molprozent Acrylamid (entspr. Struktureinheit II) ableiten und das Vemetzermonomer Triallylamin und/oder N,N'-Methylenbisacrylamid ist. In einer ebenfalls besonders bevorzugten Ausführungsform des kationischen superabsorbierenden Copolymers $e_b$) sind Struktureinheiten enthalten, die sich von 20 bis 50 Molprozent [3-(Acryloylamino)-propyl]-trimethylammoniumchlorid (entspr. Struktureinheit III), 50 bis 80 Molprozent Acrylamid (entspr. Struktureinheit 11) ableiten und das Vernetzermonomer Triallylamin und/oder N,N'-Methylenbisacrylamid ist.

Die Herstellung der erfindungsgemäßen anionischen oder kationischen superabsorbierenden Copolymere kann in an sich bekannter Weise durch Verknüpfung der die jeweiligen Struktureinheiten bildenden Monomere durch radikalische Polymerisation erfolgen (anionische Copolymere: Struktureinheiten nach den allgemeinen Formeln I, II und vorstehend beschriebene Vernetzermonomere, optional weitere anionische oder neutrale Monomere; kationische Copolymere: Struktureinheiten nach den allgemeinen Formeln III, II und vorstehend beschriebene Vernetzermonomere, optional weitere kationische oder neutrale Monomere).

Alle als Säure vorliegenden Monomere können als freie Säuren oder in deren Salzform polymerisiert werden. Ferner

kann die Neutralisation der Säuren durch Zugabe entsprechender Basen auch nach der Copolymerisation erfolgen, eine Teilneutralisation vor oder nach der Polymerisation ist ebenfalls möglich. Die Neutralisation der Monomere, bzw. der Copolymere kann beispielsweise mit den Basen Natrium-, Kalium-, Calcium- Magnesiumhydroxid und/oder Ammoniak erfolgen. Ebenfalls als Basen geeignet sind primäre, sekundäre oder tertiäre, jeweils verzweigte oder unverzweigte Alkylgruppen aufweisende $C_1$- bis $C_{20}$-Alkylamine, $C_1$- bis $C_{20}$-Alkanolamine, $C_5$- bis $C_8$-Cycloalkylamine und/oder $C_6$- bis $C_{14}$-Arylamine. Es können eine Base oder mehrere eingesetzt werden. Bevorzugt ist die Neutralisation mit Alkalimetallhydroxiden und/oder Ammoniak, besonders bevor-zugt ist Natriumhydroxid. Die anorganischen oder organischen Basen sollen so ausgewählt werden, dass sie mit der jeweiligen Säure relativ gut wasserlösliche Salze bilden.

Die Copolymerisation der Monomere kann durch radikalische Substanz-, Lösung-, Gel, Emulsions-, Dispersions- oder Suspensionspolymerisation erfolgen. Da es sich bei den erfindungsgemäßen Produkten um hydrophile, in Wasser quellbare Copolymere handelt, ist die Polymerisation in wässriger Phase, die Polymerisation in umgekehrter Emulsion, bzw. die Polymerisation in inverser Suspension bevorzugt. In besonders bevorzugten Ausführungsformen erfolgt die Umsetzung als Gelpolymerisation oder als inverse Suspensionspolymerisation in organischen Lösemitteln. Die Copolymerisation des superabsorbierenden Polymeren kann in einer besonders bevorzugten Ausführungsform als adiabatische Polymerisation durchgeführt und sowohl mit einem Redox - Initiatorsystem als auch mit einem Photoinitiator gestartet werden. Außerdem ist eine Kombination von beiden Startvarianten möglich. Das Redox-Initiatorsystem besteht aus mindestens zwei Komponenten, einem organischen oder anorganischen Oxidationsmittel und einem organischen oder anorganischen Reduktionsmittel. Häufig werden dabei Verbindungen mit Peroxideinheiten verwendet, z.B. anorganische Peroxide wie Alkalimetall- und Ammoniumpersulfat, Alkalimetall- und Ammoniumperphosphate, Wasserstoffperoxid und dessen Salze (Natriumperoxid, Bariumperoxid) oder organische Peroxide wie Benzoylperoxid, Butylhydroperoxid oder Persäuren wie Peressigsäure. Daneben können aber auch andere Oxidationsmittel eingesetzt werden, zum Beispiel Kaliumpennanganat, Natrium- und Kaliumchlorat, Kaliumdichromat usw. Als Reduktionsmittel können schwefelhaltige Verbindungen wie Sulfite, Thiosulfate, Sulfinsäure, organische Thiole (zum Beispiel Ethylmercaptan, 2-Hydroxyethanthiol, 2-Mercaptoethylammoniumchlorid, Thioglykolsäure) und andere verwendet werden. Daneben sind Ascorbinsäure und niedervalente Metallsalze möglich [Kupfer(I); Mangan(II); Eisen(II)]. Auch Phosphorverbindungen können verwendet werden, zum Beispiel Natriumhypophosphit.

Im Falle einer Photopolymerisation wird diese mit UV-Licht gestartet, welches den Zerfall eines Photoinitiators bewirkt. Als Photoinitiator können zum Beispiel Benzoin- und Benzoinderivate, wie Benzoinether, Benzil und seine Derivate, wie Benzilketale, Acryldiazoniumsalze, Azoinitiatoren wie z.B. 2,2'-Azobis(isobutyronitril), 2,2'-Azobis(2-amidinopropan)-hydrochlorid und/oder Acetopherionderivate verwendet werden.

Der Gewichtsanteil der oxidierenden und der reduzierenden Komponente im Falle der Redox-Initiatorsysteme liegt bevorzugt jeweils im Bereich zwischen 0,00005 und 0,5 Gew. %, besonders bevorzugt jeweils zwischen 0,001 und 0,1 Gew. %. Für Photoinitiatoren liegt dieser Bereich bevorzugt zwischen 0,001 und 0,1 Gew. %, besonders bevorzugt zwischen 0,002 und 0,05 Gew. %. Die genannten Gewichtsprozentangaben für oxidierende und reduzierende Komponente und Photoinitiatoren beziehen sich dabei jeweils auf die Masse der zur Copolymerisation eingesetzten Monomere. Die Auswahl der Polymerisationsbedingungen, insbesondere der Initiatormengen erfolgt mit dem Ziel möglichst langkettige Polymere zu erzeugen. Aufgrund der Unlöslichkeit der vernetzten Copolymere sind die Molekulargewichte einer Messung allerdings nur sehr schwer zugänglich.

Die Copolymerisation wird bevorzugt in wässriger Lösung, bevorzugt in konzentrierter wässriger Lösung diskontinuierlich in einem Polymerisationsgefäß (Batchverfahren) oder kontinuierlich nach der in der US-A-4857610 beschriebenen "endlosen Band" Methode durchgeführt. Eine weitere Möglichkeit ist die Polymerisation in einem kontinuierlich oder diskontinuierlich betriebenen Knetreaktor. Der Prozess wird üblicherweise bei einer Temperatur zwischen - 20 und 20 °C, bevorzugt zwischen - 10 und 10 °C gestartet und bei Atmosphärendruck ohne äußere Wärmezufuhr durchgeführt, wobei durch die Polymerisationswärme eine vom Monomergehalt abhängige maximale Endtemperatur von 50 bis 150 °C erhalten wird. Nach dem Ende der Copolymerisation erfolgt in der Regel eine Zerkleinerung des als Gel vorliegenden Polymerisates. Das zerkleinerte Gel wird im Falle einer Durchführung im Labormaßstab in einem Umlufttrockenschrank bei 70 bis 180 °C, bevorzugt bei 80 bis 150 °C getrocknet. Im industriellen Maßstab kann die Trocknung auch auf kontinuierliche Weise in den gleichen Temperaturbereichen, zum Beispiel auf einem Bandtrockner oder in einem Wirbelbetttrockner erfolgen.

In einer weiteren bevorzugten Ausführungsform erfolgt die Copolymerisation als inverse Suspensionspolymerisation der wässrigen Monomerphase in einem organischen Lösemittel. Hierbei wird bevorzugt so verfahren, dass man das in Wasser gelöste und gegebenenfalls neutralisierte Monomergemisch in Gegenwart eines organischen Lösemittels, in welchem die wässrige Monomerphase nicht oder schwer löslich ist, polymerisiert. Vorzugsweise wird in Gegenwart von "Wasser in Öl"-Emulgatoren (W/O-Emulgatoren) und/oder Schutzkolloiden auf Basis nieder- oder hochmolekularer Verbindungen gearbeitet, die in Anteilen von 0,05 bis 5 Gew. %, bevorzugt 0,1 bis 3 Gew. % bezogen auf die Monomere verwendet werden. Die W/O-Emulgatoren und Schutzkolloide werden auch als Stabilisatoren bezeichnet. Es können übliche, in der inversen Suspensionspolymerisationstechnik als Stabilisatoren bekannte Verbindungen wie zum Beispiel Hydroxypropylcellulose, Ethylcellulose, Methylcellulose, Celluloseacetatbutyratmischether, Copolymere aus Ethylen

und Vinylacetat, aus Styrol und Butylacrylat, Polyoxyethylensorbitanmonooleat, -laurat, bzw. - stearat und Blockcopolymere aus Propylen- und/oder Ethylenoxid verwendet werden.

Als organische Lösemittel kommen beispielsweise lineare aliphatische Kohlenwasserstoffe wie n-Pentan, n-Hexan, n-Heptan, verzweigte aliphatische Kohlenwasserstoffe (Isoparaffine), cycloaliphatische Kohlenwasserstoffe wie Cyclohexan und Decalin, sowie aromatische Kohlenwasserstoffe wie Benzol, Toluol und Xylol zum Einsatz. Darüber hinaus eignen sich Alkohole, Ketone, Carbonsäureester, Nitroverbindungen, halogenhaltige Kohlenwasserstoffe, Ether und viele andere organische Solventien. Bevorzugt sind solche organischen Lösemittel, die mit Wasser azeotrope Gemische bilden, besonders bevorzugt sind solche, die dabei einen möglichst hohen Wasseranteil im Azeotrop aufweisen.

Die wasserquellbaren Copolymere fallen zunächst in gequollener Form als fein verteilte wässrige Tröpfchen im organischen Suspensionsmedium an und werden vorzugsweise durch Entfernen des Wassers als feste kugelförmige Partikel im organischen Suspensionsmittel isoliert. Nach Abtrennung des Suspensionsmittels und Trocknung verbleibt ein pulverförmiger Feststoff. Die inverse Suspensionspolymerisation hat bekanntlich den Vorteil, dass durch Variation der Polymerisationsbedingungen die Partikelgrößenverteilung der Pulver kontrolliert werden kann und damit ein zusätzlicher Verfahrensschritt (Mahlvorgang) zur Einstellung der Partikelgrößenverteilung meist vermieden werden kann.

Bevorzugt sind anionische und kationische superabsorbierenden Copolymere deren gemäß der Norm edana 420.2-02 bestimmte Partikelgrößenverteilung so beschaffen ist, dass mehr als 98 Gewichtsprozent ein Sieb der Maschengröße 200 μm passieren und besonders bevorzugt mehr als 98 Gewichtsprozent ein Sieb der Maschengröße 100 μm passieren. Ganz besonders bevorzugt passieren mehr als 98 Gewichtsprozent ein Sieb der Maschengröße 63 μm. Die Partikelgrößenverteilung kann durch Mahlen der nach dem Trocknen der Copolymere erhaltenen Produkte erfolgen. Große Partikel würden in den wässrigen Baustoffmischungen auch schon visuell erkennbare inhomogene Bereiche hervorrufen, in denen nur das aus Quellung des Superabsorbers entstandene Hydrogel vorliegt. Auch bestünde verstärkt die Gefahr einer Entmischung der Hydrogele und weitere wichtige Eigenschaften wie zum Beispiel die Festigkeitsentwicklung könnten negativ beeinflusst werden.

Vorteilhafte superabsorbierenden Copolymere entwickeln rasch ihre volle Wasseraufnahmekapazität in den wässrigen Systemen. Eine langsame Wasseraufnahme würde ebenfalls zu einer unerwünschten Nachverdickung durch langsamen Wasserentzug aus der Baustoffmischung führen. Zur Überprüfung ob eine Nachverdickung vorliegt, gibt man zu der Baustoffmischung, z.B. einem Fugenfüller Wasser zu und rührt diese an. Nach der Wasserzugabe soll sich bevorzugt im Zeitraum zwischen der dritten und zehnten Minute das Ausbreitmaß um weniger als 0,5 cm verändern.

Eine bevorzugte Eigenschaft der anionischen als auch der kationischen superabsorbierenden Copolymere ist ihre Eigenschaft in wässrigen Systemen unlöslich zu sein, bzw. nur einen geringen extrahierbaren Anteil aufzuweisen. Der extrahierbare Anteil ist der Anteil, der aus dem superabsorbierenden Polymer in ein umgebendes wässriges Medium diffundieren kann. Die Methode zu Bestimmung des extrahierbaren Anteils wird im Kapitel Testmethoden näher beschrieben. Der extrahierbare Anteil ist jeweils bezogen auf die Masse des Superabsorbers bevorzugt kleiner als 10 Gew. %, besonders bevorzugt kleiner als 9 Gew. % und insbesondere bevorzugt kleiner als 8 Gew. %.

Die Auffnahmekapazität der anionischen als auch kationischen Superabsorber in wässrigen Salzlösungen und insbesondere auch in Calciumionen enthaltenden Lösungen ist bevorzugt nicht zuletzt aus wirtschaftlichen Gründen möglichst groß. Die Aufnahmekapazität ist definiert als Quotient aus der Masse der aufgenommenen Flüssigkeit und der Masse des trocknen Superabsorbers (Angabe in g/g) und wird gemäß der Norm edana 440.2-02 unter Abwandlung der Vorschrift, d.h. Ersatz der dort als Testflüssigkeit angegebenen 0,9 prozentigen Natriumchloridlösung durch eine einprozentige Calciumformiatlösung bestimmt. Die Methode wird im Kapitel Testmethoden näher beschrieben. Bei Produkten, die nach dem Verfahren der Gelpolymerisation hergestellt sind, beträgt die Aufnahmekapazität bevorzugt mehr als 10 g/g, besonders bevorzugt mehr als 15 g/g und insbesondere bevorzugt ist sie größer als 20 g/g, Bei Produkten, die nach dem Verfahren der Inversen Suspensionspolymerisation hergestellt sind, ist die nach dem gleichen Verfahren ermittelte Aufnahmekapazität bevorzugt größer als 5 g/g, besonders bevorzugt größer als 10 g/g und insbesondere größer als 15 g/g. Die superabsorbierenden Polymere sind bezüglich ihrer Aufnahmekapazität bevorzugt so beschaffen und in der Trockenmischung so dosiert, dass sie zwischen 10 und 40 Gew. %, bevorzugt zwischen 15 und 35 Gew. %, besonders bevorzugt zwischen 20 und 30 Gew. % der zur Trockenmischung hinzugefügten Wassermenge aufnehmen können. Sowohl die anionischen als auch die kationischen superabsorbierenden Copolymere sind in der Trockenmischung von 0,02 bis 2,0 Gew. % enthalten, bevorzugt von 0,1 bis 1,5 Gew. %, besonders bevorzugt von 0,2 bis 1,0 Gew. %. Gegenüber den kationischen superabsorbierenden Copolymeren sind die anionischen superabsorbierenden Copolymere bevorzugt.

Die superabsorbierenden Copolymere halten Wasser, bzw. auch calciumionenhaltige Salzlösungen wie sie in den Baustoffmischungen vorliegen, in Mikrobereichen als Hydrogel fest. Die erfindungsgemäßen superabsorbierenden Copolymere enthaltenden Trockenmischungen, bzw. die durch Zugabe von Wasser entstehenden Baustoffmischungen sind besonders wirtschaftlich vorteilhaft, da die Einsatzmengen an redispergierbarem Polymerpulver erheblich reduziert werden können.

In den erfindungsgemäßen Trockenmischungen können noch weitere übliche Zusätze wie Luftporenbildner,

Entschäumer, Verdicker auf Acrylatbasis, funktionelle Schichtsilikate, Für zementöse Systeme übliche Fließmittel wie beispielsweise Polycarboxylatether (PCE), Melamin Formaldehyd Sulfonate (MFS), β-Naphthalin Formaldehyd Sulfonate (BNS) und Fasern wie Cellulosefaser oder synthetische **Fasern (z.B. Aramidfasern) enthalten sein**.In einer besonderen Ausführungsform der Erfindung sind Füllstoffe in den Trockenmischungen enthalten. Diese sind in den wässrigen Systemen nur in geringem Maße löslich, bzw. quellbar. Sie wirken insbesondere nicht als ein Bindemittel.

Bevorzugte Füllstoffe sind zum Beispiel Kalksteinmehl, Kreide, Marmor, Glimmer und/oder Talkum, wobei Kreide besonders und Kalksteinmehl insbesondere bevorzugt ist. Die Füllstoffe können auch als Leichtfüllstoffe wie Mikrohohlkugeln aus Glas, wie Blähglas und als Alumosilikate, wie Perlithe und Blähton vorliegen. Leichtfüllstoffe auf natürlicher Basis wie Mineralschaum, Bims, Schaumlava und/oder Bläh-Vermiculit sind ebenfalls verwendbar. Bevorzugt sind Füllstoffe mit einer Korngrößenverteilung, die so beschaffen ist, dass bei Siebversuchen nach DIN EN 933-1 mehr als 95 Gew. % ein Sieb der Maschenweite 0,25 mm passieren und besonders bevorzugt mehr als 95 Gew. % ein Sieb der Maschenweite 0,125 mm passieren.

Die Füllstoffe sind in der Trockenmischung von 2 bis 85 Gew. %, bevorzugt von 10 bis 70 Gew. % und besonders bevorzugt von 15 bis 50 Gew. % enthalten.

In einer bevorzugten Ausführungsform der Erfindung sind in der Trockenmischung enthalten

f) 0,0005 bis 0,05 Gewichtsprozent eines (meth)acrylamidogruppenhaltigen Copolymers, welches keine Struktureinheiten enthält, die sich von Monomerverbindungen ableiten, die mehr als eine radikalisch polymerisierbare, ethylenisch ungesättigte Vinylgruppe enthalten und aufweisen

f-i) 60 bis 100 Molprozent Struktureinheiten der allgemeinen Fornnel (II)

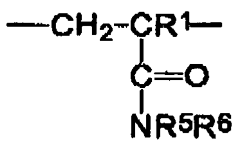

worin

$R^1$ die vorstehend genannte Bedeutung hat,

$R^5$ und $R^6$ jeweils gleich oder verschieden sind und unabhängig voneinander je-weils durch Wasserstoff, einen verzweigten oder unverzweigten alipha-tischen Kohlenwasserstoffrest mit 1 bis 20 C-Atomen, einen cyc-loaliphatischen Kohlenwasserstoffrest mit 5 bis 8 C-Atomen und/odereinen Arylrest mit 6 bis 14 C-Atomen repräsentiert wird.

Im Folgenden sollen die (meth)acrylamidogruppenhaltigen Copolymere f) näher beschrieben werden. Die Struktureinheiten gemäß der allgemeinen Formel II enthaltenden (meth)acrylamidogruppenhaltigen Copolymere f) kommen als Additiv zur Verbesserung der Verarbeitbarkeit, insbesondere der Standfestigkeit, zum Einsatz. Beispielsweise gehen die Struktureinheiten aus der Copolymerisation von einer oder mehreren der Monomerspezies Acrylamid, Methacrylamid, N-Methylacrylamid, N-Methylmethacrylamid, N,NDimethylacrylamid, N-Ethylacrylamid, N,N-Diethylacrylamid, N-Cyclohexylacrylamid, N-Benzylacrylamid, N,N-Dimethylaminopropylacrylamid, N,N-Dimethylaminoethylacrylamid und/oder N-tertiär Butylacrylamid hervor. Bevorzugt sind Methylacrylamid, N,N-Dimethylacrylamid, und Methacrylamid, besonders bevorzugt ist Acrylamid.

In den (meth)acrylamidogruppenhaltigen Copolymeren f) können bevorzugt 3 bis 40 Molprozent weitere Struktureinheiten enthalten sein, die sich bevorzugter Weise von anionischen oder kationischen Struktureinheiten ableiten. Bevorzugte anionische Stuktureinheiten sind (Meth)acrylsäure und jeweils deren Salze. Die Struktureinheiten, die sich von (Meth) acrylsäure ableiten, können auch aus einer Teilverseifung der Amidgruppen erhalten werden. Bevorzugte kationische Struktureinheiten leiten sich beispielsweise von den kationischen Struktureinheiten der allgemeinen Formel III ab. Die der allgemeinen Formel III entsprechende, ein quaterniertes Stickstoffatom aufweisende Struktureinheit geht bevorzugt hervor aus der Polymerisation von einer oder mehrerer Monomerspezies ausgewählt aus der Gruppe der [2-(Acryloyloxy)-ethyl]-trimethylammoniumsalze, [2-(Methacryloyloxy)-ethyl]-trimethylammoniumsalze, [3-(Acryloylamino)-propyl]-trimethylammoniumsalze und /oder [3-(Methacryloylamino)-propyl]-trimethylammoniumsalze. Die genannten Salze liegen bevorzugt als Halogenide oder Methosulfate vor. Besonders bevorzugt sind [3-(Acryloylamino)-propyl]-trimethylammoniumsalze und /oder [3-(Methacryloylamino)-propyl]-trimethylammoniumsalze. Insbesondere bevorzugt sind [3-(Acryloylamino)-propyl]-trimethylammoniumchlorid (DIMAPA-Quat) und / oder [3-(Methacryloylamino)-propyl]-trimethylammoniumchlorid (MAPTAC).

Als weitere bevorzugte kationische Monomere sind beispielsweise N,N-Dimethyl-diallyl-ammoniumchhlorid und N,N-Diethyl-diallyl-ammoniumchlorid zu nennen.

Die (meth)acrylamidogruppenhaltigen Copolymere f) weisen bevorzugt ein Molekulargewicht (Gewichtsmittel) von $1 \cdot 10^6$ bis $1 \cdot 10^7$ auf. Sie sind in der Trockenmischung bevorzugt in Pulverform und bevorzugt in einer Menge enthalten von 0,0005 bis 0,1 Gew. %, besonders bevorzugt von 0,001 bis 0,05 Gew. % und insbesondere bevorzugt von 0,003 bis 0,03 Gew. %.

In einer speziellen Ausführugsform der Erfindung sind in den Trockenmischungen enthalten

g) 0,1 bis 1,5 Gewichtsprozent eines wasserlöslichen, sulfogruppenhaltigen Copolymers, aufweisend

g-i) 3 bis 96 Molprozent Struktureinheiten der allgemeinen Formel (I)

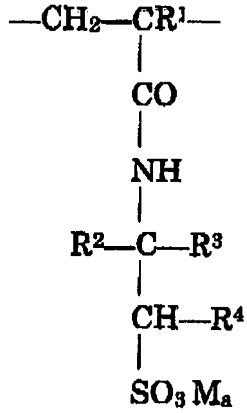

(I)

worin

| | |
|---|---|
| $R^1$ | die vorstehend genannte Bedeutung hat, |
| $R^2$, $R^3$, $R^4$ | jeweils die vorstehend genannten Bedeutungen haben, |
| M | und adie vorstehend genannten Bedeutungen haben, |

g-ii) 3 bis 59 Molprozent Struktureinheiten der allgemeinen Formel (II)

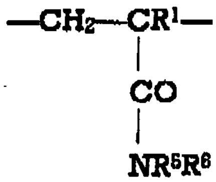

(II)

worin

| | |
|---|---|
| $R^1$ | die vorstehend genannte Bedeutung hat, |
| $R^5$ und $R^6$ | jeweils die vorstehend genannten Bedeutungen haben, |

und mindestens eine weitere Struktureinheit ausgewählt aus

g-iii) 0,001 bis 10 Molprozent Struktureinheiten der allgemeinen Formel (IV)

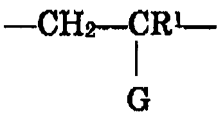

(IV)

worin

$R^1$ die vorstehend genannte Bedeutung hat,

G gleich oder verschieden ist und durch $-COO(C_nH_{2n}O)_p-R^{11}$ und/oder $-(CH_2)_q-O(C_nH_{2n}O)_p-R^{11}$ repräsentiert wird,

$R^{11}$ gleich oder verschieden ist und durch und/oder einen ungesättigten oder gesättigten, linearen oder verzweigten aliphatischen Alkylrest mit 10 bis 40 C-Atomen repräsentiert wird,

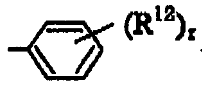

$R^{12}$ gleich oder verschieden ist und durch Wasserstoff, eine $C_1$- bis $C_6$-Alkylgruppe, eine Arylalkylgruppe mit $C_1$- bis $C_{12}$-Alkyl-und $C_6$- bis $C_{14}$-Arylrest repräsentiert wird,

n gleich oder verschieden ist und durch eine ganze Zahl von 2 bis 4 repräsentiert wird,

p gleich oder verschieden ist und durch eine ganze Zahl von 0 bis 200 repräsentiert wird,

q gleich oder verschieden ist und durch eine ganze Zahl von 0 bis 20 repräsentiert wird,

r gleich oder verschieden ist und durch eine ganze Zahl von 0 bis 3 repräsentiert wird,

und

g-iv) 0,1 bis 30 Molprozent der Struktureinheiten der allgemeinen Formel (V)

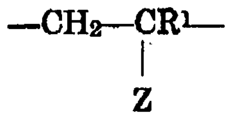

(V)

worin

$R^1$ die vorstehend genannte Bedeutung hat,

Z durch $-(CH_2)_q-O(C_nH_{2n}O)_p-R^{13}$ repräsentiert wird,

n, p und q die vorstehend genannten Bedeutungen häben,

$R^{13}$ gleich oder verschieden ist und durch Wasserstoff und/oder einen $C_1$- bis $C_4$-Alkylrest repräsentiert wird.

Im Folgenden sollen die wasserlöslichen sulfogruppenhaltigen Copolymere g) beschrieben werden. Die wasserlöslichen sulfogruppenhaltigen Copolymere g) stellen weitere Wasserretentionsmittel dar und sind von den vorstehend beschriebenen Wasserretentionsmitteln auf Polysaccharidbasis und den ebenfalls vorstehend beschriebenen, bevorzugt wasserunlöslichen anionischen, superabsorbierenden Copolymeren $e_a$) zu unterscheiden. Die wasserlöslichen sulfogruppenhaltigen Copolymere werden in der Trockenmischung bevorzugt in Pulverform eingesetzt. Sie enthalten Struktureinheiten gemäß den allgemeinen Formeln I und II, wobei mindestens eine weitere Struktureinheit ausgewählt aus den Struktureinheiten IV und V enthalten ist. Dies bedeutet im einzelnen, dass die Copolymere Struktureinheiten gemäß den allgemeinen Formeln I, II, IV oder Struktureinheiten gemäß den allgemeinen Formeln I, II, V oder Struktureinheiten gemäß den allgemeinen Formeln I, II, IV, V enthalten können. Der Mengenanteil der Struktureinheiten gemäß der allgemeinen Formel I im wasserlöslichen sulfogruppenhaltigen Copolymer beträgt zwischen 3 und 96 Molprozent, für die Struktureinheiten gemäß der allgemeinen Formel II zwischen 3 und 59 Molprozent, für die Struktureinheiten gemäß der allgemeinen Formel IV zwischen 0,001 und 10 Molprozent und für die Struktureinheiten gemäß der allgemeinen Formel V zwischen 0,1 und 30 Molprozent. Vorzugsweise verwendete Copolymere enthalten 30 bis 80 Molprozent Struktureinheiten gemäß der allgemeinen Formel 1 und 5 bis 50 Molprozent gemäß der allgemeinen Formel II, weiterhin 0,1 bis 5 Molprozent Struktureinheiten gemäß der allgemeinen Formel IV oder 0,2 bis 15 Molprozent Struktureinheiten gemäß der allgemeinen Formel V, oder auch beide Struktureinheiten IV und V in den entsprechenden vorstehend genannten Mengen.

Die Struktureinheit gemäß der allgemeinen Formel I leitet sich bevorzugt ab von Monomeren wie 2-Acrylamido-2-methylpropansulfonsäure, 2-Methacrylamido-2-methylpropansulfonsäure, 2-Acrylamidobutansulfonsäure, 2-Acrylamido-2,4,4-trimethylpentansulfonsäure und jeweils deren Salzverbindungen. Besonders bevorzugt sind 2-Acrylamido-2-methylpropansulfonsäure und dessen Salzverbindungen.

Die Struktureinheit gemäß der allgemeinen Formel II leitet sich bevorzugt ab von Monomeren wie Acrylamid, Methacrylamid, N-Methylacrylamid, N,N-Dimethylacrylamid, N-Ethylacrylamid, N-Cyclohexylacrylamid, N-Benzylacrylamid, N-Methylolacrylamid, N-tertiär Butylacrylamid ab.
Die Struktureinheit gemäß der allgemeinen Formel IV leitet sich bevorzugt ab von Monomeren wie Tristyrylphenolpolyethylenglykol-1100-Methacrylat, Behenylpolyethylenglykol-1100-methacrylat, Stearylpolyethylenglykol-1100-methacrylat, Tristyrylphenolpolyethylenglykol-1100-acrylat, Tristyrylphenol-polyethenglykol-1100-monovinylether, Behenylpolyethenglykol-1100-monovinylether, Stearylpolyethenglykol-1100-monovinylether, Tristyrylphenol-polyethylenglykol-1100-vinyloxy-butylether, Behenylpolyethylenglykol-1100-vinyloxy-butylether, Tristyrylphenol-polyethylenglykol-blockpropylenglykolallylether, Behenylpolyothylenglykol-block-propylenolykolallylether, Stearylpolyethylenglykol-block-propylenglykolallylether.
Die Struktureinheit gemäß der allgemeinen Formel V leitet sich bevorzugt ab von Monomeren wie Allylpolyethylenglykol-(350 bis 2000), Methylpolyethylenglykol-(350 bis 2000)-monovinylether, Polyethylenglykol-(500 bis 5000)-vinyloxy-butylether, Polyethylenglykolblock-propylenglykol-(500 bis 5000)-vinyloxy-butylether und Methylpolyethylenglykolblock-propylenglykolallylether.

Die Herstellung der erfindungsgemäßen Copolymere g) kann in an sich bekannter Weise durch Verknüpfung der sich von den entsprechenden Struktureinheiten I, II, IV und V ableitenden Monomere durch radikalische, Substanz-, Lösungs-, Gel-, Emulsions-, Dispersionsoder Suspensionspolymerisation erfolgen. Es hat sich als vorteilhaft erwiesen, die Anzahl der Struktureinheiten so einzustellen, dass die wasserlöslichen sufogruppenhaltigen Copolymere ein zahlenmittleres Molekulargewicht von 50.000 bis 20.000 000 aufweisen.
Die wasserlöslichen sulfogruppenhaltigen Copolymere g) sind in der Trockenmischung bevorzugt von 0,1 bis 1,5 Gew. % enthalten, besonders bevorzugt von 0,3 bis 1,2 Gew. % und insbesondere bevorzugt von 0,5 bis 1,0 Gew. %.

In einer weiteren speziellen Ausführungsform der Erfindung sind in der Trockenmischung enthalten

h) 0,1 bis 1,5 Gewichtsprozent eines wasserlöslichen kationischen Copoymers, aufweisend

h,i) 5 bis 60 Molprozent Struktureinheiten der allgemeinen Formel (VI),

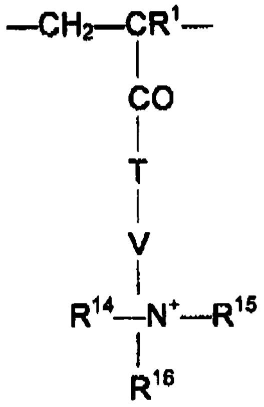

$(W^-)$

(VI)

worin

| | |
|---|---|
| $R^1$ | die vorstehend genannte Bedeutung hat, |
| $R^{14}$ und $R^{15}$ | jeweils gleich oder verschieden sind und unabhängig voneinander jeweils durch Wasserstoff, einen aliphatischen Kohlenwasserstoffrest mit 1 bis 20 C-Atomen, einen cycloaliphatischen Kohlenwasserstoffrest mit 5 bis 8 C-Atomen und/oder einen Arylrest mit 6 bis 14 C-Atomen, repräsentiert werden, |
| $R^{16}$ | gleich oder verschieden ist und durch einen mit $R^{14}$ oder $R^{15}$ identischen Substituenten, $-(CH_2)_x-SO_3L_a$, |

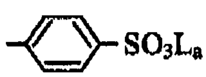

und/oder

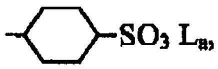

repräsentiert wird,

L gleich oder verschieden ist und durch ein ein- oder zweiwertiges Metallkation, Ammoniumkation und/oder quaternäres Ammoniumkation $(NR_1R_{14}R_{15}R_{16})^+$, repräsentiert wird,

a gleich oder verschieden ist und durch ½ und/oder 1 repräsentiert wird,

T gleich oder verschieden ist und durch Sauerstoff, -NH und/oder $NR^{14}$, repräsentiert wird,

V gleich oder verschieden ist und durch $-(CH_2)_m-$,

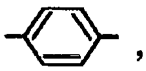

und/oder

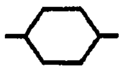

repräsentiert wird,

m gleich oder verschieden ist und durch eine ganze Zahl von 1 bis 6 repräsentiert wird,

$W^-$ gleich oder verschieden ist und durch ein Halogenatom, $C_1$-bis $C_4$-Alkylsulfat und/oder $C_1$-bis $C_4$-Alkylsulfonat, repräsentiert wird,

h-ii) 20 bis 59 Molprozent einer Struktureinheit, welche durch folgende allgemeine Formeln (VIIa) und/oder (VIIb) repräsentiert wird:

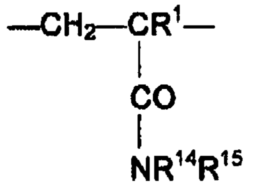

(VIIa)

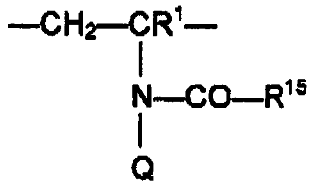

(VIIb)

worin

Q gleich oder verschieden ist und durch Wasserstoff und/oder $-CHR^{14}R^{17}$ repräsentiert wird,

$R^1$, $R^{14}$, $R^{15}$ jeweils mit der Maßgabe die vorstehend genannten Bedeutungen haben, dass im Falle von Q ungleich Wasserstoff $R^{14}$ und $R^{15}$ in der allgemeinen Formel (VIIb) zusammen für eine $-CH_2-(CH_2)_y-$ Methylengruppe stehen können, so dass die allgemeine Formel (VIIb) gemäß folgender Struktur vorliegt:

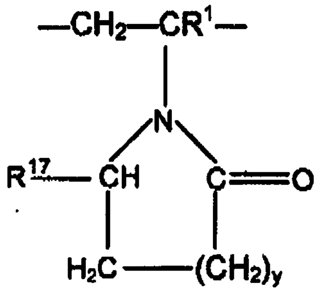

worin

$R^{17}$ gleich oder verschieden sowie repräsentiert durch ein Wasserstoffatom, einen $C_1$- bis $C_4$-Alkylrest, eine Carbonsäuregruppe und/oder eine Carboxylatgruppe $-COOL_a$ ist, wobei y gleich oder verschieden ist und durch eine ganze Zahl von 1 bis 4 repräsentiert wird, sowie L und a jeweils die vorstehend genannten Bedeutungen haben,

h-iii) 0,01 bis 3 Molprozent Struktureinheiten der allgemeinen Formel (VIII)

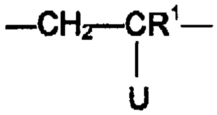

(VIII)

worin

U gleich oder verschieden ist und durch $-COO(C_nH_{2n}O)_s-R^{18}$, und/oder $-(CH_2)_q-O(C_nH_{2n}O)_s-R^{18}$ repräsentiert wird,

n gleich oder verschieden ist und durch eine ganze Zahl zwischen 2 und 4 repräsentiert wird,

s gleich oder verschieden ist und durch eine ganze Zahl zwischen 1 und 200 repräsentiert wird,

q gleich oder verschieden ist und durch eine ganze Zahl zwischen 0 und 20 repräsentiert wird,

$R^{18}$ gleich oder verschieden ist und durch

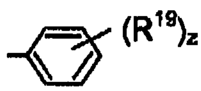

repräsentiert wird,

$R^{19}$ gleich oder verschieden ist und durch Wasserstoff, eine $C_1$- bis $C_6$-Alkylgruppe, und/oder eine Arylalkylgruppe mit $C_1$- bis $C_{12}$-Alkyl- sowie $C_6$- bis $C_{14}$-Arylrest repräsentiert wird,

z gleich oder verschieden ist und durch eine ganze Zahl zwischen 1 und 3 repräsentiert wird und

$R^1$ die vorstehend genannte Bedeutung hat.

Im Folgenden sollen die wasserlöslichen kationischen Copolymere h) näher beschreiben werden. Die Copolymere h) stellen weitere Wasserretentionsmittel dar und sind von den vorstehend beschriebenen Wasserretentionsmitteln auf Polysaccharidbasis c) und den ebenfalls vorstehend beschriebenen, bevorzugt wasserunlöslichen kationischen, superabsorbierenden Copolymeren $e_b$) zu unterscheiden. Die wasserlöslichen kationischen Copolymere h) werden in der Trockenmischung bevorzugt in Pulverform eingesetzt. Die Rheologiemodifizierung, das Wasserrückhaltevermögen, die Klebrigkeit und das Verarbeitungsprofil lassen sich zudem je nach Zusammensetzung der Copolymere optimal für die jeweilige Anwendung einstellen.

Die für die Anwendung der Copolymere h) in wässrigen Baustoffanwendungen erforderliche gute Wasserlöslichkeit wird insbesondere durch die kationische Struktureinheit gemäß der allgemeinen Formel VI gewährleistet. Die neutrale Struktureinheit gemäß den allgemeinen Formeln VIIa und/oder VIIb wird hauptsächlich für den Aufbau der Hauptkette und das Erreichen der geeigneten Kettenlängen benötigt, wobei durch die hydrophoben Struktureinheiten gemäß der allgemeinen Formel VIII eine assoziative Verdickung ermöglicht wird, die für die angestrebten Produkteigenschaften vorteilhaft ist.

In den kationischen Copolymeren h) geht die Struktureinheit gemäß der allgemeinen Formel VI bevorzugt hervor aus der Polymerisation von einer oder mehrerer Monomerspezies ausgewählt aus der Gruppe der [2-(Acryloyloxy)-ethyl]-trimethylammoniumsalze, [2-(Methacryloyloxy)-ethyl]-trimethylammoniumsalze, [3-(Acryloylamino)-propyl]-trimethylammoniumsalze, [3-(Methacryloylamino)-propyl]-trimethylammoniumsalze N-(3-Sulfopropyl)-N-methyacryloxyethyl-N,N-dimethyl-ammonium-betain, N-(3-Sulfopropyl)-N-methyacrylamidopropyl-N,N-dimethyl-ammonium-betain und/oder 1-(3-Sulfopropyl)-2-vinyl-pyridinium-betain. Die genannten Salze liegen bevorzugt als Halogenide oder Methosulfate vor. Besonders bevorzugt sind [3-(Acryloylamino)-propyl]-trimethylammoniumsalze und /oder [3-(Methacryloylamino)-propyl]-trimethylammoniumsalze. Insbesondere bevorzugt sind [3-(Acryloylamino)-propyl]-trimethylammoniumchlorid (DIMAPA-Quat) und / oder [3-(Methacryloylamino)-propyl]-trimethylammoniumchlorid (MAPTAC).

Es ist prinzipiell praktikabel, bis zu ca. 15 Molprozent der Struktureinheiten gemäß der allgemeinen Formel VI durch weitere kationische Struktureinheiten zu ersetzen, die sich von N,N-Dimethyl-diallyl-ammoniumchhlorid und N,N-Diethyl-diallyl-ammoniumchlorid ableiten.

Bevorzugt geht die Struktureinheit gemäß der allgemeinen Formel VIIa hervor aus der Polymerisation von einer oder

mehreren der Monomerspezies Acrylamid, Methacrylamid, N-Methylacrylamid, N,N-Dimethylacrylamid, N-Ethylacrylamid, N-Cyclohexylacrylamid, N-Benzylacrylamid, N-Methylolacrylamid, N-tertiär Butylacrylamid usw. Beispiele für Monomere als Basis für die Struktur VIIb sind N-Methyl-N-vinylformamid, N-Methyl-N-vinylacetamid, N-Vinylpyrrolidon, N-Vinylcaprolactam und/oder N-Vinylpyrrolidon-5-carbonsäure.
Bevorzugt geht die Struktureinheit gemäß der allgemeinen Formel VIII aus der Polymerisation von einer oder mehreren der Monomerspezies Tristyrylphenol-polyethylenglykol-1100-methacrylat, Tristyrylphenol-polyethylenglykol-1100-acrylat, Tristyrylphenolpolyethenglykol-1100-monovinylether, Tristyrylphenol-polyethylenglykol-1100-vinyloxybutylether und/oder Tristyrylphenol-polyethylenglykol-block-propylenglykolallylether, hervor.

In einer bevorzugten Ausführungsform der Erfindung sind die Struktureinheiten gemäß der allgemeinen Formel VI mit 15 bis 50 Molprozent, gemäß der allgemeinen Formel VIIa und/oder VIIb mit 30 bis 55 Molprozent und gemäß der allgemeinen Formel VIII mit 0,03 bis 1 Molprozent in dem Copolymer enthalten.

Neben den vorstehend genannten Strukturelementen gemäß den allgemeinen Formel VI, VIIa und/oder VIIb, und VIII können noch bis zu 40 Molprozent weitere Stukturelemente in den Copolymeren enthalten sein, die sich bevorzugt von [2-(Methacryloyl-oxy)-ethyl)]-diethylamin, [3-(Acryloylamino)-propyl)]-dimethylamin und/oder [3-(Methacryloylamino)-propyl)]-dimethylamin ableiten. Die Herstellung der erfindungsgemäßen Copolymere h) erfolgt bevorzugt in an sich bekannter Weise durch Verknüpfung der die Struktureinheiten gemäß den allgemeinen Formeln VI, VIIa und/oder VIIb, und VIII bildenden Monomere und gegebenenfalls weiterer Monomere durch radikalische Polymerisation. Da es sich bei den erfindungsgemäßen Produkten um wasserlösliche Copolymere handelt, ist die Polymerisation in wässriger Phase, die Polymerisation in umgekehrter Emulsion bzw. die Polymerisation in inverser Suspension bevorzugt. Zweckmäßigerweise erfolgt die Herstellung durch Gelpolymerisation in wässriger Phase.

Es hat sich als vorteilhaft erwiesen, die Anzahl der Struktureinheiten so einzustellen, dass die wasserlöslichen kationischen Copolymere h) ein zahlenmittleres Molekulargewicht von 50.000 bis 20.000.000 aufweisen.
Die wasserlöslichen, kationischen Copolymere h) sind in der Trockenmischung bevorzugt von 0,1 bis 1,5 Gew. % enthalten, bevorzugt von 0,3 bis 1,2 Gew. % und besonders bevorzugt von 0,5 bis 1,0 Gew. %.
Durch Vermischen der erfindungsgemäßen Trockenmischungen mit Wasser erhält man die erfindungsgemäßen Baustoffmischungen.
Die Verwendung der erfindungsgemäßen Baustoffmischung erfolgt bevorzugt als Fugenfüller für Gipsplatten gemäß DIN1168, Spachtelmasse gemäß DIN1168 und als Putz gemäß DIN18550. Spachtelmassen dienen zum Beispiel zur abschließenden Bearbeitung eines Untergrunds um ebene Flächen (Wände oder Decken) zu erhalten.

## Beispiele

<u>I Testmethoden</u>

Bestimmung der Aufnahmekapazität der superabsorbierenden Copolymere

Die Bestimmung der Aufnahmekapazität der erfindungsgemäßen Superabsorber erfolgt gemäß der für die Hygieneindustrie entwickelten Norm edana 440.2-02 unter Abwandlung der Vorschrift, d.h. Ersatz der dort als Testflüssigkeit angegebenen 0,9 prozentigen Natriumchloridlösung durch eine einprozentige Calciumformiatlösung. Diese auch "Teebeuteltest" genannte Methode wird ausgeführt, indem man eine definierte Menge (etwa 200 mg) superabsorbierendes Polymer in einen Teebeutel einschweißt und 30 Minuten in eine einprozentige Calciumformiatlösung taucht. Anschließend lässt man die Teebeutel fünf Minuten lang abtropfen und wiegt sie aus. Ein Teebeutel ohne superabsorbierendes Polymer wird als Blindwert mitgeprüft. Zur Berechnung der Aufnahmekapazität verwendet man folgende Formel:

$$\textbf{Aufnahmekapazität} = \textbf{(Auswaage - Blindwert - Einwaage) / Einwaage} \quad \textbf{(g/g)}$$

Bestimmung des extrahierbaren Anteils der superabsorbierenden Copolymere

Der extrahierbare Anteil wird durch eine Extraktion des superabsorbierenden Copolymeren in 0,9 prozentiger Natriumchloridlösung mit anschließender Total Organic Content (TOC-Bestimmung) durchgeführt. 1,0 g des superabsorbierenden Polymeren werden dazu in einem Liter 0,9 prozentiger Natriumchloridlösung sechzehn Stunden stehen gelassen und anschliessend abfiltriert. Nach Bestimmung des TOC-Gehalts des Filtrates berechnet man über den bekannten Kohlenstoffgehalt des superabsorbierenden Polymeren den Extrahierbaren Anteil.

II Synthese superabsorbierender Copolymere

Copolymer 1 (anionisches superabsorbierendes Copolymer)

In einem 2 1-Dreihalskolben mit Rührer und Thermometer wurden 160 g Wasser vorgelegt und anschließend nacheinander 352,50 g (0,74 mol) 2-Acrylamido-2-methylpropansulfonsäure Natriumsalz (50 Gew.-%ige Lösung in Wasser), 286,40 g (2,0 mol) Acrylamid (50 Gew.-%ige Lösung in Wasser) und 0,3 g (0,0021 mol) Methylenbisacrylamid zugesetzt. Nach Einstellen auf pH 7 mit 20 %iger Natronlauge und dreißigminütigem Spülen mit Stickstoff kühlt man auf ca. 5 °C ab. Die Lösung wurde in einen Plastikbehälter mit den Maßen (b · t · h) 15 cm · 10 cm · 20 cm umgefüllt und anschließend wurden nacheinander 16 g einprozentige 2,2'-Azo-bis-(2-amidinopropan)-dihydrochlorid Lösung, 20 g einprozentige Natriumperoxodisufat Lösung 0,7 g einprozentige Rongalit C-Lösung, 16,2 g 0,1 prozentige tert.-Butylhydroperoxid-Lösung und 2,5 g 0,1 prozentige Fe(II)sulfat-Heptahydrat Lösung zugesetzt. Die Copolymerisation wurde durch Bestrahlen mit UV-Licht (zwei Philips Röhren; Cleo Performance 40 W) gestartet. Nach ca. zwei Stunden nimmt man das hart gewordene Gel aus dem Plastikbehälter und schneidet es mit einer Schere in Würfel einer Kantenlänge von ca. 5 cm. Bevor die Gelwürfel mittels eines herkömmlichen Fleischwolfs zerkleinert werden, streicht man sie mit dem Trennmittel Sitren 595 (Polydimethylsiloxan-Emulsion; Firma Goldschmidt) ein. Bei dem Trennmittel handelt es sich um eine Polydimethylsiloxanemulsion, die im Verhältnis eins zu zwanzig mit Wasser verdünnt wurde.
Das erhaltene Gelgranulat von Copolymer 1 wurde gleichmaßig auf Trockengitter verteilt und in einem Umlufttrockenschrank bei ca. 120 bis 140 °C bis zur Gewichtskonstanz getrocknet. Es wurden ca. 375 g eines weißen, harten Granulats erhalten, welches mit Hilfe einer Zentrifugalmühle in einen pulverförmigen Zustand überführt wurde. Der mittlere Teilchendurchmesser des Polymerpulvers betrug 30 bis 50 μm und der Anteil an Partikeln, die ein Sieb der Maschengröße 63 μm nicht passieren, war kleiner als 2 Gew. %.

Die Aufnahmekapazität des Copolymers 1 in einprozentiger Calciumformiat Lösung beträgt 32 g/g und der extrahierbare Anteil 7,0 Prozent. Das Produkt hat sich als scherstabil erwiesen und weist insbesondere keine Nachverdickung, z.B. im Fliesenkleber auf.

Das Copolymer 1 erreicht innerhalb von vier Minuten seine maximale Wasseraufnahmekapazität, was ungefähr den üblichen Anrührzeiten zementöser Baustoffmischungen entspricht.

Copolymer 2 (kationisches superabsorbierendes Copolymer)

In einem 21-Dreihalskolben mit Rührer und Thermometer wurden 276,5 g Wasser vorgelegt. Anschließend wurden nacheinander 246,90 g (0,72 mol) DIMAPA-Quat (60 Gew.-%ige Lösung in Wasser), 262,60 g (1,84 mol) Acrylamid (50 Gew.-%ige Lösung in Wasser) und 0,3 g (0,0021 mol) Methylenbisacrylamid zugesetzt. Nach Einstellen auf pH 7 mit 20 %iger Natronlauge und dreißigminütigem Spülen mit Stickstoff kühlt man auf ca. 5 °C ab. Die Lösung wurde in einen Plastikbehälter mit den Maßen (b · t · h) 15 cm · 10 cm · 20 cm umgefüllt und anschließend wurden nacheinander 16 g einprozentige 2,2'-Azo-bis-(2-amidinopropan)-dihydrochlorid Lösung, 20 g einprozentige Natriumperoxodisufat-Lösung 0,7 g einprozentige Rongalit C-Lösung, 16,2 g 0,1 %ige tert.-Butylhydroperoxid-Lösung und 2,5 g 0,1 %ige Fe (II)sulfat-Heptahydrat zugesetzt. Die Polymerisation wurde durch Bestrahlen mit UV-Licht (zwei Philips Röhren; Cleo Performance 40 W) gestartet. Nach ca. zwei Stunden wurde das harte Gel aus dem Plastikbehälter genommen und die weitere Aufarbeitung erfolgte in gleicher Weise wie vorstehend für das Copolymer 1 beschrieben. Es wurden ca. 375 g eines weißen, harten Granulats erhalten, welches mit Hilfe einer Zentrifugalmühle in einen pulverigen Zustand überführt wurde. Der mittlere Teilchendurchmesser des Polymerpulvers betrug 30 bis 50 μm, der Anteil an Partikeln, die ein Sieb der Maschengröße 63 μm nicht passieren war kleiner als 2 Gew. %. Die Aufnahmekapazität des Copolymers 2 in einprozentiger Calciumformiat Lösung beträgt 29 g/g und der extrahierbare Anteil 9,0 Prozent.

Vergleichspolymer 1

Das Vergleichspolymer 1 Luquasorb® 3746 SX der Firma BASF AG ist ein vernetztes teilneutralisiertes Natriumpolyacrylat. In einer einprozentigen Calciumformiat Lösung kollabiert das Gel, das heißt es tritt ein fast vollkommener Verlust der Absorptionskapazität ein.

Vergleichspolymer 2

Beim Vergleichspolymer 2 Luquasorb® AF 2 der Firma BASF AG handelt es sich um ein vernetztes Copolymer aus Acrylamid und Acrylsäure, wobei die Acrylsäure mit Natriumhydroxid neutralisiert wurde. Das kommerzielle Produkt Luquasorb® AF 2 (1000-3000 μm) wurde mittels einer Zentrifugalmühle so gemahlen, dass der Anteil an Partikeln, die ein Sieb der Maschengröße 63 μm nicht passieren kleiner als 2 Gew. % war. Das Produkt wurde nach dem Verfahren der Gelpolymerisation hergestellt.

In einer einprozentigen Calciumformiat Lösung beträgt die Aufnahmekapazität 10 g/g.

III Anwendungstests

Fugenfüller für Gipsplatten

Die gebrauchsfertig formulierten Trockenmischungen werden nach entsprechender Homogenisierung (Durchmischung) in eine vorgelegte, definierte Wassermenge unter Rühren eingestreut. Anschließend lässt man das System eine Minute reifen. Hierauf wird die Mischung kräftig mit der Kelle verrührt bis sich eine einheitlich konsistente Masse gebildet hat (Dauer ca. eine Minute). Eine erste visuelle Prüfung des Systems erfolgt unmittelbar danach.

Bestimmung des Ausbreitmaßes

Die Bestimmung des Ausbreitmaßes erfolgte nach der Reifezeit gemäß DIN 18555, Teil 2.

Bestimmung der Verarbeitungsqualität (Verarbeitbarkeit) und Klebrigkeit

Die Verarbeitungsqualität und die Klebrigkeit an der Kelle wurden qualitativ durch den Verarbeiter beurteilt. Hierzu wurden Gipsplatten auf Stoss auf einem Holzgestell verschraubt und die Fuge mit dem entsprechenden Testsystem verspachtelt

Bestimmung der Fugenfestigkeiten

Für die Beurteilung der Fugenfestigkeiten wurden die Biegebruchkräfte in N/cm Fugenlänge ermittelt. Sie wurden an 30 · 30 cm großen Prüfkörpern mit mittiger Fugenverspachtelung (ohne Fugenstreifen) bestimmt, wobei der Auflageabstand 20 cm betrug, also 10 cm auf jeder Seite der Fuge.

Als Maß für die Elastizität dient die Durchbiegung (mm) bis zum Bruch.

Die Testergebnisse der Fugenfüller sind der Tabelle 1 zu entnehmen.

| **Tabelle 1: Fugenfüller für Gipsplatten** | Komp. | Bsp. 1 | Bsp. 2 | Bsp. 3 | Bsp. 4 | Bsp 5 | Vgl. Bsp. 1 | Vgl. Bsp. 2 | Vgl. Bsp. 3 | Vgl. Bsp 4 |
|---|---|---|---|---|---|---|---|---|---|---|
| **Zusammensetzung der Trockenmischung** | Gew. % | Gew. % | Gew % | Gew. % | Gew. % | Gew. % | Gew % | Gew. % | Gew. % | Gew. % |
| α-Calciumsulfathalbhydrat | a) | 78,05 | 78,05 | 78,85 | 78,05 | 78,83 | 78,05 | 78,05 | 78,05 | 78,85 |
| Vinnapas® RE 5010N[1)] | b) | 2,0 | 2,0 | 1,2 | 2,0 | 1,2 | 2,0 | 2,0 | 2,0 | 1,2 |
| Culminal® MHPC 20.000 PR [2)] | c) | 0,4 | 0,4 | 0,4 | 0,4 | 0,4 | 0,4 | 0,4 | 0,4 | 0,4 |
| Amylotex® 8100 [2)] | c) | 0,07 | 0,09 | 0,07 | 0,09 | 0,07 | 0,15 | 0,14 | 0,12 | 0,15 |
| Retardan® P[3)] | d) | 0,5 | 0,5 | 0,5 | 0,5 | 0,5 | 0,5 | 0,5 | 0,5 | 0,5 |
| Copolymer 1 | $e_a$) | 0,1 | 0,1 | 0,1 | 0 | 0 | 0 | 0 | 0 | 0 |
| Copolymer 2 | $e_b$) | 0 | 0 | 0 | 0,1 | 0,1 | 0 | 0 | 0 | 0 |
| Vergleichspolymer 1 [4)] | | 0 | 0 | 0 | 0 | 0 | 0 | 0,1 | 0 | 0 |
| Vergleichspolymer 2 [5)] | | 0 | 0 | 0 | 0 | 0 | 0 | 0 | 0,1 | 0 |
| Polyacrylamid [6)] | f) | 0.001 | 0,001 | 0,001 | 0,001 | 0,001 | 0,003 | 0,003 | 0,003 | 0,003 |
| Cellulosefasern [7)] | | 0,9 | 0,9 | 0,9 | 0,9 | 0,9 | 0,9 | 0,9 | 0,9 | 0,9 |
| Polyvinylalkohol [8)] | | 1,5 | 1,5 | 1,5 | 1,5 | 1,5 | 1,5 | 1,5 | 1,5 | 1,5 |
| Kalksteinmehl [9)] | | 14,0 | 14,0 | 14,0 | 14,0 | 14,0 | 14,0 | 14,0 | 14,0 | 14,0 |
| Glimmer | | 2,5 | 2,5 | 2,5 | 2,5 | 2,5 | 2,5 | 2,5 | 2,5 | 2,5 |

(fortgesetzt)

| Tabelle 1: Fugenfüller für Gipsplatten | Komp. | Bsp. 1 | Bsp. 2 | Bsp. 3 | Bsp. 4 | Bsp 5 | Vgl. Bsp. 1 | Vgl. Bsp. 2 | Vgl. Bsp. 3 | Vgl. Bsp 4 |
|---|---|---|---|---|---|---|---|---|---|---|
| **Zusammensetzung der Trockenmischung** | Gew. % | Gew. % | Gew % | Gew. % | Gew. % | Gew. % | Gew % | Gew. % | Gew. % | Gew. % |
| Wasser / Trockenmischung (g/kg) | | 500 | 500 | 500 | 500 | 500 | 500 | 500 | 500 | 500 |
| | | | | | | | | | | |
| **Testergebnisse** | | | | | | | | | | |
| Ausbreitmaß (cm) | | 15,9 | 16,1 | 16,0 | 16,0 | 16,1 | 16,0 | 16,1 | 16,1 | 16,4 |
| Klebrigkeit / Verarbeitbarkeit | | sehr gut | sehr gut | sehr gut | sehr gut | sehr gut | sehr gut | sehr gut | sehr gut | gut |
| Fugenfestigkeit (N/cm) | | 16 | 15 | 9 | 16 | 10 | 9 | 9 | 10 | 5 |
| Durchbiegung (mm) | | 1,6 | 1,4 | 0,5 | 1,5 | 0,6 | 0,5 | 0,5 | 0,5 | 0,3 |

1) Fa. Wacker Chemie AG, Burghausen
2) Fa. Aqualon, Düsseldorf
3) Fa. Tricosal GmbH, Illertissen
4) Luquasorb® 3746 SX (Fa. BASF AG, Ludwigshafen)
5) Luquasorb® AF 2 (Fa. BASF AG, Ludwigshafen)
6) Praestol® 2640 (Fa. Ashland, Deutschland, Krefeld)
7) Arbocel® ZZC 500 (Fa. J. Rettenmaier & Söhne GmbH + Co., Rosenberg)
8) Mowiol® 10-98 (Fa. Kuraray Europe GmbH, Düsseldorf)
9) Omyacarb® AL 130 (Fa. Omya, Oftringen)

Die erfindungsgemäßen Beispiele 1, 2 und 4 weisen gegenüber den Vergleichsbeispielen deutlich höhere Fugenfestigkeiten und Durchbiegungen auf.

Eine ähnlich gute Fugenfestigkeit und Durchbiegung wie bei der Referenz (Vergleichsbespiel 1) erreicht man auch bei einer Reduzierung des redispergierbaren Polymerpulvers (Beispiele 3 und 5). Im Gegensatz dazu sind beim Vergleichsbeispiel 4 sowohl die Verarbeitbarkeit / Klebrigkeit als auch die Fugenfestigkeit und Durchbiegung stark beeinträchtigt. Die Reduzierung des kostenintensiven redispergierbaren Polymerpulvers ohne Minderung der Qualität der Baustoffprodukte, stellt einen erheblichen wirtschaftlichen Nutzen für den Anwender dar. Aufgrund der erfindungsgemäßen Superabsorber verfilmt das redispergierbare Polymerpulver besser, was sich positiv auf die Flexibilität der Baustoffmaterialien auswirkt.

Das Ausbreitmaß der Testmischungen der Tabelle 1 wurde auf 16 $\pm$ 0,3 cm eingestellt. Der Einsatz der erfindungsgemäßen Superabsorber führt zu einer Reduktion der in der Testmischung frei verfügbaren Wassermenge, da ein Teil des Wassers an den Superabsorber gebunden wird. Da dies ohne weitere Korrekturmaßnahmen ein ungewolltes Versteifen der Testmischungen zur Folge hätte, wurde die Dosierung der eine verdickende Wirkung aufweisenden Additive (Komponenten vom Typ c) und / oder f)) entsprechend reduziert, um das gewünschte Ausbreitmaß zu erreichen. In den Vergleichsbeispielen 2 und 3 absorbieren die nicht erfindungsgemäßen Superabsorber in dem Fugenfüller kaum Wasser, daher können die verdickenden Komponenten vom Typ c) und / oder f) auch nicht, bzw. kaum reduziert werden. Aus dem Einsatz von nicht erfindungsgemäßen Superabsorbern (Vergleichsbeispiele 2 und 3) resultieren auch keine höheren Durchbiegungen, bzw. nur geringfügig höhere Fugenfestigkeiten im Vergleich zum als Referenz dienenden Vergleichsbeispiel 1.

## Patentansprüche

**1.** Trockenmischung, **dadurch gekennzeichnet, dass** diese enthält

a) 10 bis 98 Gewichtsprozent eines auf Calciumsulfat basierenden Bindemittels,
b) 0,5 bis 7 Gewichtsprozent eines redispergierbaren Polymerpulvers,

c) 0,1 bis 1,5 Gewichtsprozent eines auf Polysaccharidstrukturen basierenden Wasserretentionsmittels,

d) 0,01 bis 2,0 Gewichtsprozent eines Abbindeverzögerers und entweder

$e_a$) 0,02 bis 2,0 Gewichtsprozent anionisches pulverförmiges Copolymer, wobei das Copolymer aufweiset

$e_a$-i) 10 bis 60 Molprozent sulfonsäuregruppenhaltige Struktureinheiten der allgemeinen Formel (I)

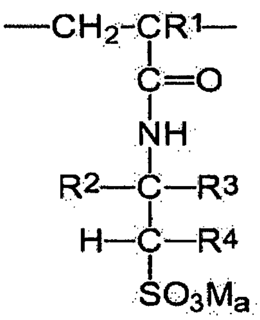

worin

$R^1$ gleich oder verschieden ist und durch Wasserstoff und/oder einen Methylrest repräsentiert wird,
$R^2$, $R^3$ $R^4$ jeweils gleich oder verschieden sind und unabhängig voneinander je-weils durch Wasserstoff, einen aliphatischen, verzweigten oder unver- zweigten Kohlenwasserstoffrest mit 1 bis 6 C-Atomen und/oder aromatischen Kohlenwasserstoffrest mit 6 bis 14 C-Atomen repräsentiert werden,
M gleich oder verschieden ist und durch Wasserstoff, ein ein- oder zweiwertiges Metallkation und/oder ein Ammoniumion repräsentiert wird,
a gleich oder verschieden ist und durch 1/2 und/oder 1 repräsentiert wird,

$e_a$-ii) 30 bis 85 Molprozent (meth)acrylamidogruppenhaltige Struktureinheiten der allgemeinen Formel (II)

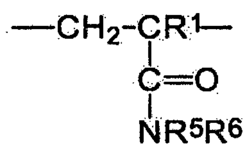

worin

$R^1$ die vorstehend genannte Bedeutung hat,
$R^5$ und $R^6$ jeweils gleich oder verschieden sind und unabhängig voneinander jeweils durch Wasserstoff, einen verzweigten oder unverzweigten aliphatischen Kohlenwasserstoffrest mit 1 bis 20 C-Atomen, einen cycloaliphatischen Kohlenwasserstoffrest mit 5 bis 8 C-Atomen und/oder einen Arylrest mit 6 bis 14 C-Atomen repräsentiert wird,

$e_a$-iii)0,03 bis 1 Molprozent Struktureinheiten, die sich von Monomerverbindungen ableiten, die mehr als eine radikalisch polymerisierbare, ethylenisch ungesättigte Vinylgruppe aufweisen,

oder alternativ zu $e_a$)

$e_b$) 0,02 bis 2,0 Gewichtsprozent kationisches pulverförmiges Copolymer, wobei das Copolymer aufweist

$e_b$-i) 10 bis 60 Molprozent kationische, ein quaterniertes Stickstoffatom aufweisende Struktureinheiten der allgemeinen Formel (III)

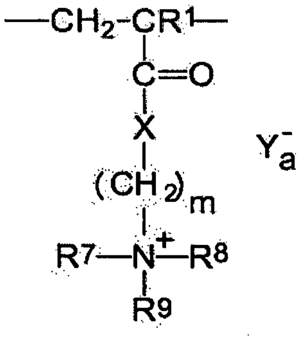

worin

$R^1$ die vorstehend genannte Bedeutung hat,
$R^7$, $R^8$, $R^9$, $R^{10}$ jeweils gleich oder verschieden sind und unabhängig voneinander jeweils durch Wasserstoff, einen verzweigten oder unverzweigten aliphatischen Kohlenwasserstoffrest mit 1 bis 20 C-Atomen, einen cycloaliphatischen Kohlenwasserstoffrest mit 5 bis 8 C-Atomen und/oder einen Arylrest mit 6 bis 14 C-Atomen, repräsentiert werden,
m gleich oder verschieden ist und durch eine ganze Zahl von 1 bis 6 repräsentiert wird,
X gleich oder verschieden ist und durch Sauerstoff und/oder N-$R^{10}$ repräsentiert wird,
$Y^-_a$ gleich oder verschieden ist und durch ein Halogenid, $C_1$-bis $C_4$-Alkylsulfat, $C_1$-bis $C_4$-Alkylsulfonat und/oder Sulfat, repräsentiert wird,
a gleich oder verschieden ist und durch 1/2 und/oder 1 repräsentiert wird,

$e_b$-ii) 30 bis 85 Molprozent (meth)acrylamidogruppenhaltige Struktureinheiten der allgemeinen Formel (II)

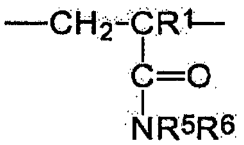

worin

$R^1$ die vorstehend genannte Bedeutung hat,
$R^5$ und $R^6$ jeweils die vorstehend genannten Bedeutungen haben,

$e_b$-iii) 0,03 bis 1 Molprozent Struktureinheiten, die sich von Monomerverbindungen ableiten, die mehr als eine radikalisch polymerisierbare, ethylenisch ungesättigte Vinylgruppe aufweisen.

2. Trockenmischung nach Anspruch 1, **dadurch gekennzeichnet, dass** das Bindemittel als α- Calciumsulfathalbhydrat und/oder β- Calciumsulfathalbhydrat vorliegt.

3. Trockenmischung nach Anspruch 1 bis 2, **dadurch gekennzeichnet, dass** der Abbindeverzögerer ausgewählt ist aus der Gruppe Zitronensäure, Zitrat, Weinsäure, Tartrat, Äpfelsäure, Malat, Gluconsäure, Gluconat, Calciumphosphat, synthetische Aminosäurederivate und Abbau-, und Hydrolyseprodukte von Proteinen.

4. Trockenmischung nach einem der Ansprüche 1 bis 3, **dadurch gekennzeichnet, dass** das redispergierbare Polymerpulver vorliegt als Vinylacetat Polymer, Vinylacetat-Ethylen Copolymer, Vinylacetat-Vinylester Copolymer und/oder Vinylacetat-Vinylester-Ethylen Copolymer, wobei jeweils die Vinylestermonomere ausgewählt sind aus der Gruppe Vinyllaurat, Vinylpivalat und Vinylversatate, weiterhin als Vinylacetat-Acrylsäureester-Copolymer, Vinylacetat-Acrylsäureester-Ethylen Copolymer, Styrol-Butadien Copolymer und Styrol-Acrylsäureester Copolymer, wobei jeweils die Acrylsäureester Ester mit verzweigten oder unverzweigten Alkoholen mit 1 bis 10 C-Atomen darstellen.

5. Trockenmischung nach einem der Ansprüche 1 bis 4, **dadurch gekennzeichnet, dass** das auf Polysaccharidstrukturen basierende Wasserretentionsmittel als Methylhydroxyethylcellulose und/oder Methylhydroxypropylcellulose

vorliegt.

**6.** Trockenmischung nach einem der Ansprüche 1 bis 5, **dadurch gekennzeichnet, dass** die sulfonsäuregruppenhaltigen Struktureinheiten der allgemeinen Formel (I) des anionischen Copolymers sich von 2-Acrylamido-2-methylpropansulfonsäure und/oder deren Salzen ableiten.

**7.** Trockenmischung nach einem der Ansprüche 1 bis 5, **dadurch gekennzeichnet, dass** die kationischen, ein quaterniertes Stickstoffatom aufweisenden Struktureinheiten der allgemeinen Formel (III) des kationischen Copolymers sich ableiten von [3-(Methacryloylamino)-propyl]-trimethylammoniumsalzen und/oder [3-(Acryloylamino)-propyl]-trimethylammoniumsalzen.

**8.** Trockenmischung nach einem der Ansprüche 1 bis 7, **dadurch gekennzeichnet, dass** die (meth)acrylamidogruppenhaltigen Struktureinheiten der allgemeinen Formel (II) sich von Acrylamid, Methacrylamid, Methylacrylamid und/oder N,N-Dimethylacrylamid ableiten.

**9.** Trockenmischung nach einem der Ansprüche 1 bis 8, **dadurch gekennzeichnet, dass** die Struktureinheiten, die sich von Monomerverbindungen mit mehr als einer ethylenisch ungesättigten Vinylverbindung ableiten, sich von Triallylisocyanurat, Triallylamin, N,N'-Methylenbisacrylamid und/oder N,N'-Methylenbismethacrylamid ableiten.

**10.** Trockenmischung nach einem der Ansprüche 1 bis 9, enthaltend

f) 0,0005 bis 0,05 Gewichtsprozent eines (meth)acrylamidogruppenhaltigen Copolymers, welches keine Struktureinheiten enthält, die sich von Monomerverbindungen ableiten, die mehr als eine radikalisch polymerisierbare ethylenisch ungesättigte Vinylgruppe enthalten und aufweisen

f-i) 60 bis 100 Molprozent Struktureinheiten der allgemeinen Formel (II)

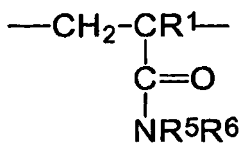

worin

$R^1$ die vorstehend genannte Bedeutung hat,
$R^5$ und $R^6$ jeweils gleich oder verschieden sind und unabhängig voneinander jeweils durch Wasserstoff, einen verzweigten oder unverzweigten aliphatischen Kohlenwasserstoffrest mit 1 bis 20 C-Atomen, einen cycloaliphatischen Kohlenwasserstoffrest mit 5 bis 8 C-Atomen und/oder einen Arylrest mit 6 bis 14 C-Atomen repräsentiert wird.

**11.** Trockenmischung nach einem der Ansprüche 1 bis 10, enthaltend

g) 0,1 bis 1,5 Gewichtsprozent eines wasserlöslichen, sulfogruppenhaltigen Copolymers, aufweisend

g-i) 3 bis 96 Molprozent Struktureinheiten der allgemeinen Formel (I)

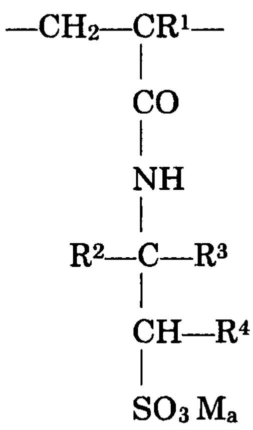

(I)

worin

$R^1$ die vorstehend genannte Bedeutung hat,
$R^2$, $R^3$, $R^4$ jeweils die vorstehend genannten Bedeutungen haben,
M und a die vorstehend genannten Bedeutungen haben,

g-ii)3 bis 59 Molprozent Struktureinheiten der allgemeinen Formel (II)

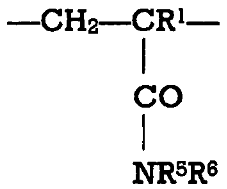

(II)

worin

$R^1$ die vorstehend genannte Bedeutung hat,
$R^5$ und $R^6$ jeweils die vorstehend genannten Bedeutungen haben, und mindestens eine weitere Struktureinheit ausgewählt aus

g-iii) 0,001 bis 10 Molprozent Struktureinheiten der allgemeinen Formel (IV)

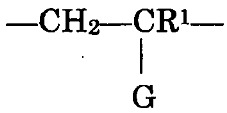

(IV)

worin

$R^1$ die vorstehend genannte Bedeutung hat,
G gleich oder verschieden ist und durch $-COO(C_nH_{2n}O)_p-R^{11}$ und/oder $-(CH_2)_q-O(C_nH_{2n}O)_p-R^{11}$ repräsentiert wird,
$R^{11}$ gleich oder verschieden ist und durch

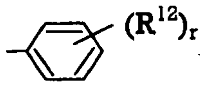

und/oder einen ungesättigten oder gesättigten, linearen oder verzweigten aliphatischen Alkylrest mit 10 bis 40 C-Atomen repräsentiert wird,
$R^{12}$ gleich oder verschieden ist und durch Wasserstoff, eine $C_1$- bis $C_6$-Alkylgruppe, eine Arylalkylgruppe mit $C_1$- bis $C_{12}$-Alkyl- und $C_6$- bis $C_{14}$-Arylrest repräsentiert wird,
n gleich oder verschieden ist und durch eine ganze Zahl von 2 bis 4 repräsentiert wird,
p gleich oder verschieden ist und durch eine ganze Zahl von 0 bis 200 repräsentiert wird,
q gleich oder verschieden ist und durch eine ganze Zahl von 0 bis 20 repräsentiert wird,
r gleich oder verschieden ist und durch eine ganze Zahl von 0 bis 3 repräsentiert wird,

und
g-iv) 0,1 bis 30 Molprozent der Struktureinheiten der allgemeinen Formel (V)

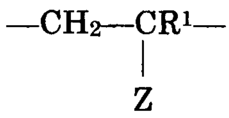

(V)

worin

$R^1$ die vorstehend genannte Bedeutung hat,
Z durch $-(CH_2)_q-O(C_nH_{2n}O)_p-R^{13}$ repräsentiert wird,
n, p und q die vorstehend genannten Bedeutungen haben,
$R^{13}$ gleich oder verschieden ist und durch Wasserstoff und/oder einen $C_1$- bis $C_4$-Alkylrest repräsentiert wird.

**12.** Trockenmischung nach einem der Ansprüche 1 bis 11, enthaltend

h) 0,1 bis 1,5 Gewichtsprozent eines wasserlöslichen kationischen Copoymers, aufweisend

h-i) 5 bis 60 Molprozent Struktureinheiten der allgemeinen Formel (VI),

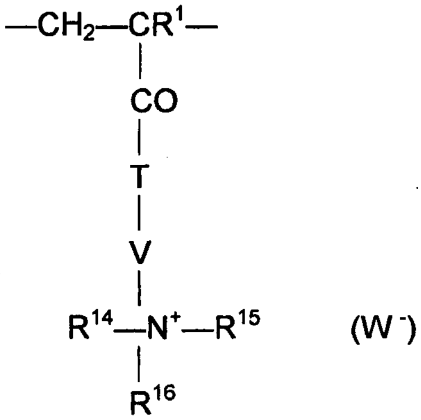

(VI)

worin

$R^1$ die vorstehend genannte Bedeutung hat,
$R^{14}$ und $R^{15}$ jeweils gleich oder verschieden sind und unabhängig voneinander jeweils durch Wasserstoff, einen aliphatischen Kohlenwasserstoffrest mit 1 bis 20 C-Atomen, einen cycloaliphatischen Kohlenwasserstoffrest mit 5 bis 8 C-Atomen und/oder einen Arylrest mit 6 bis 14 C-Atomen, repräsentiert

werden,
$R^{16}$ gleich oder verschieden ist und durch einen mit $R^{14}$ oder $R^{15}$ identischen Substituenten, $-(CH_2)_x-SO_3La$,

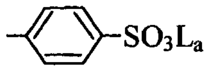

und/oder

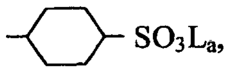

repräsentiert wird,
L gleich oder verschieden ist und durch ein ein- oder zweiwertiges Metallkation, Ammoniumkation und/oder quaternäres Ammoniumkation $(NR_1R_{14}R_{15}R_{16})^+$, repräsentiert wird,
a gleich oder verschieden ist und durch ½ und/oder 1 repräsentiert wird, T gleich oder verschieden ist und durch Sauerstoff, -NH und/oder $-NR^{14}$, repräsentiert wird,
V gleich oder verschieden ist und durch $-(CH_2)_m-$,

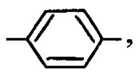

und/oder

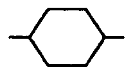

repräsentiert wird,
m gleich oder verschieden ist und durch eine ganze Zahl von 1 bis 6 repräsentiert wird,
$W^-$ gleich oder verschieden ist und durch ein Halogenatom, $C_1$-bis $C_4$-Alkylsulfat und/oder $C_1$- bis $C_4$-Alkylsulfonat, repräsentiert wird,

h-ii) 20 bis 59 Molprozent einer Struktureinheit, welche durch folgende allgemeine Formeln (VIIa) und/oder (VIIb) repräsentiert wird:

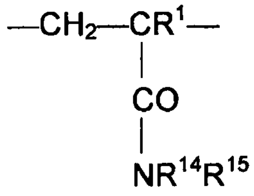

(VIIa)

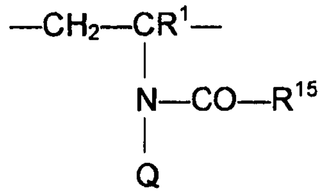

(VIIb)

worin

Q gleich oder verschieden ist und durch Wasserstoff und/oder $-CHR^{14}R^{17}$ repräsentiert wird,
$R^1$, $R^{14}$, $R^{15}$ jeweils mit der Maßgabe die vorstehend genannten Bedeutungen haben, dass im Falle von Q ungleich Wasserstoff $R^{14}$ und $R^{15}$ in der allgemeinen Formel (VIIb) zusammen für eine $-CH_2-(CH_2)_y-$ Methylengruppe stehen können, so dass die allgemeine Formel (VIIb) gemäß folgender Struktur vorliegt:

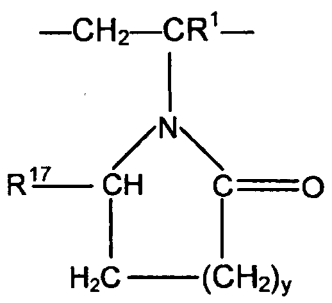

worin
$R^{17}$ gleich oder verschieden sowie repräsentiert durch ein Wasserstoffatom, einen $C_1$- bis $C_4$-Alkylrest, eine Carbonsäuregruppe und/oder eine Carboxylatgruppe $-COOL_a$ ist, wobei y gleich oder verschieden ist und durch eine ganze Zahl von 1 bis 4 repräsentiert wird, sowie L und a jeweils die vorstehend genannten Bedeutungen haben,

h-iii) 0,01 bis 3 Molprozent Struktureinheiten der allgemeinen Formel (VIII)

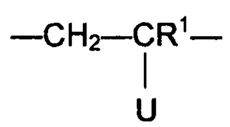

(VIII)

worin

U gleich oder verschieden ist und durch $-COO(C_nH_{2n}O)_s-R^{18}$, und/oder $-(CH_2)_q-O(C_nH_{2n}O)_s-R^{18}$ repräsentiert wird,
n gleich oder verschieden ist und durch eine ganze Zahl zwischen 2 und 4 repräsentiert wird,
s gleich oder verschieden ist und durch eine ganze Zahl zwischen 1 und 200 repräsentiert wird,
q gleich oder verschieden ist und durch eine ganze Zahl zwischen 0 und 20 repräsentiert wird,
$R^{18}$ gleich oder verschieden ist und durch

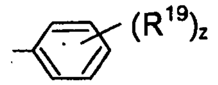

repräsentiert wird, $R^{19}$ gleich oder verschieden ist und durch Wasserstoff, eine $C_1$- bis $C_6$-Alkylgruppe, und/oder eine Arylalkylgruppe mit $C_1$- bis $C_{12}$-Alkyl- sowie $C_6$- bis $C_{14}$-Arylrest repräsentiert wird,
z gleich oder verschieden ist und durch eine ganze Zahl zwischen 1 und 3 repräsentiert wird und
$R^1$ die vorstehend genannte Bedeutung hat.

**13.** Baustoffmischung, enthaltend eine Trockenmischung gemäß einem der Ansprüche 1 bis 12 und Wasser.

**14.** Verwendung der Baustoffmischung gemäß Anspruch 13 als Fugenfüller für Gipsplatten gemäß DIN1168, als Spachtelmasse gemäß DIN1168 und als Putz gemäß DIN18550.

## Claims

**1.** Dry mix, **characterized in that** it comprises

a) from 10 to 98 percent by weight of a binder based on calcium sulphate,
b) from 0.5 to 7 percent by weight of a redispersible polymer powder,
c) from 0.1 to 1.5 percent by weight of a water retention agent which is based on polysaccharide structures,
d) from 0.01 to 2.0 percent by weight of a setting retarder and either

$e_a$) from 0.02 to 2.0 percent by weight of anionic pulverulent copolymer, with the copolymer comprising

$e_a$-i) from 10 to 60 molpercent of structural units containing a sulphonic acid group and having the general formula (I)

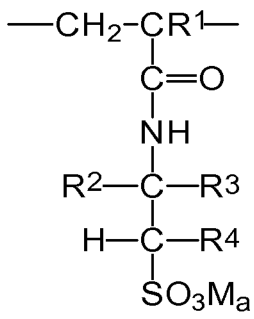

where

the radicals $R^1$ are identical or different and are each hydrogen or a methyl radical,
the radicals $R^2$, $R^3$, $R^4$ are in each case identical or different and are each, independently of one another, hydrogen, an aliphatic, branched or unbranched hydrocarbon radical having from 1 to 6 carbon atoms or an aromatic hydrocarbon radical having from 6 to 14 carbon atoms,
the ions M are identical or different and are each hydrogen, a monovalent or divalent metal cation or an ammonium ion,
the indices a are identical or different and are each either 1/2 or 1,

$e_a$-ii) from 30 to 85 molpercent of structural units containing a (meth)acrylamido group and having the general formula (II)

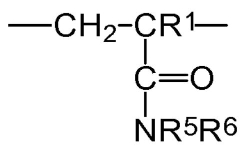

where

$R^1$ is as defined above,
the radicals $R^5$ and $R^6$ are in each case identical or different and are each, independently of one another, hydrogen, a branched or unbranched aliphatic hydrocarbon radical having from 1 to 20 carbon atoms, a cycloaliphatic hydrocarbon radical having from 5 to 8 carbon atoms or an aryl radical having from 6 to 14 carbon atoms,

$e_a$-iii) from 0.03 to 1 molpercent of structural units derived from monomer compounds which have more than one free-radically polymerizable, ethylenically unsaturated vinyl group,

or, as an alternative to $e_a$),
$e_b$) from 0.02 to 2.0 percent by weight of cationic pulverulent copolymer, with the copolymer comprising

$e_b$-i) from 10 to 60 molpercent of cationic structural units containing a quaternized nitrogen atom and having the general formula (III)

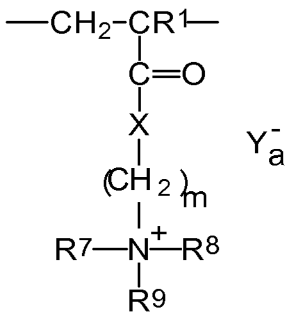

where

$R^1$ is as defined above,
the radicals $R^7$, $R^8$, $R^9$, $R^{10}$ are in each case identical or different and are each, independently of one another, hydrogen, a branched or unbranched aliphatic hydrocarbon radical having from 1 to 20 carbon atoms, a cycloaliphatic hydrocarbon radical having from 5 to 8 carbon atoms or an aryl radical having from 6 to 14 carbon atoms,
the indices m are identical or different and are each an integer from 1 to 6,
the radicals X are identical or different and are each oxygen or N-$R^{10}$,
the ions $Y^-_a$ are identical or different and are each a halide, $C_1$-$C_4$-alkylsulphate, $C_1$-$C_4$-alkylsulphonate or sulphate,
the indices a are identical or different and are each either 1/2 or 1,

$e_b$-ii) from 30 to 85 molpercent of structural units containing a (meth)acrylamido group and having the general formula (II)

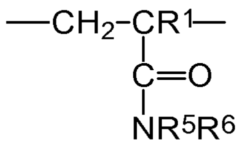

where

$R^1$ is as defined above,
$R^5$ and $R^6$ are each as defined above,

$e_b$-iii) from 0.03 to 1 molpercent of structural units derived from monomer compounds which have more than one free-radically polymerizable, ethylenically unsaturated vinyl group.

2. Dry mix according to Claim 1, **characterized in that** the binder is present as α-calcium sulphate hemihydrate and/or β-calcium sulphate hemihydrate.

3. Dry mix according to Claim 1 or 2, **characterized in that** the setting retarder is selected from the group consisting of citric acid, citrate, tartaric acid, tartrate, malic acid, malate, gluconic acid, gluconate, calcium phosphate, synthetic amino acid derivatives and degradation and hydrolysis products of proteins.

4. Dry mix according to any of Claims 1 to 3, **characterized in that** the redispersible polymer powder is present as vinyl acetate polymer, vinyl acetate-ethylene copolymer, vinyl acetate-vinyl ester copolymer and/or vinyl acetate-vinyl esterethylene copolymer, with the vinyl ester monomers in each case being selected from the group consisting of vinyl laurate, vinyl pivalate and vinyl versatates, also as vinyl acetate-acrylic ester copolymer, vinyl acetate-acrylic esterethylene copolymer, styrene-butadiene copolymer and styrene-acrylic ester copolymer, with the acrylic esters in each case being esters with branched or unbranched alcohols having from 1 to 10 carbon atoms.

5. Dry mix according to any of Claims 1 to 4, **characterized in that** the water retention agent based on polysaccharide structures is present as methylhydroxyethylcellulose and/or methylhydroxypropylcellulose.

**6.** Dry mix according to any of Claims 1 to 5, **characterized in that** the structural units containing a sulphonic acid group and having the general formula (I) in the anionic copolymer are derived from 2-acrylamido-2-methylpropanesulphonic acid and/or its salts.

**7.** Dry mix according to any of Claims 1 to 5, **characterized in that** the cationic structural units containing a quaternized nitrogen atom and having the general formula (III) in the cationic copolymer are derived from [3-(methacryloylamino) propyl]-trimethylammonium salts and/or [3-(acryloyl-amino)propyl]trimethylammonium salts.

**8.** Dry mix according to any of Claims 1 to 7, **characterized in that** the structural units containing a (meth)acrylamido group and having the general formula (II) are derived from acrylamide, methacrylamide, methylacrylamide, and/or N,N-dimethylacrylamide.

**9.** Dry mix according to any of Claims 1 to 8, **characterized in that** the structural units derived from monomer compounds having more than one ethylenically unsaturated vinyl compound are derived from triallyl isocyanurate, triallylamine, N,N'-methylenebisacrylamide and/or N,N'-methylenebismethacrylamide.

**10.** Dry mix according to any of Claims 1 to 9, containing

f) from 0.0005 to 0.05 percent by weight of a copolymer which contains (meth)acrylamido groups and does not contain any structural units derived from monomer compounds which contain more than one free-radically polymerizable, ethylenically unsaturated vinyl group and comprise

f-i) from 60 to 100 molpercent of structural units of the general formula (II)

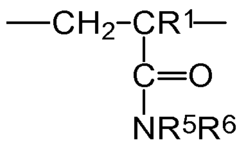

where

$R^1$ is as defined above,
$R^5$ and $R^6$ are in each case identical or different and are each, independently of one another, hydrogen, a branched or unbranched aliphatic hydrocarbon radical having from 1 to 20 carbon atoms, a cycloaliphatic hydrocarbon radical having from 5 to 8 carbon atoms or an aryl radical having from 6 to 14 carbon atoms.

**11.** Dry mix according to any of Claims 1 to 10, containing

g) from 0.1 to 1.5 percent by weight of a watersoluble copolymer which contains sulpho groups and comprises

g-i) from 3 to 96 molpercent of structural units of the general formula (I)

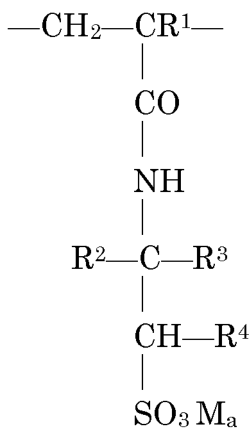

(I)

where

$R^1$ is as defined above,
$R^2$, $R^3$, $R^4$ are each as defined above,
M and a are as defined above,

g-ii) from 3 to 59 molpercent of structural units of the general formula (II)

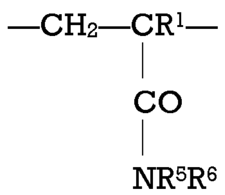

(II)

where

$R^1$ is as defined above,
$R^5$ and $R^6$ are each as defined above, and at least one further structural unit selected from among

g-iii) from 0.001 to 10 molpercent of structural units of the general formula (IV)

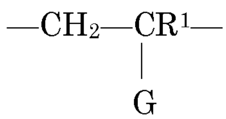

(IV)

where

$R^1$ is as defined above, the radicals
G are identical or different and are each -COO $(C_nH_{2n}O)_p$-$R^{11}$ or - $(CH_2)_q$-O $(C_nH_{2n}O)_p$-$R^{11}$,

the radicals

$R^{11}$ are identical or different and are each

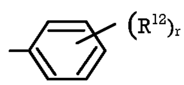

or an unsaturated or saturated, linear or branched aliphatic alkyl radical having from 10 to 40 carbon atoms,
the radicals
$R^{12}$ are identical or different and are each hydrogen, a $C_1$-$C_6$-alkyl group, an arylalkyl group having a $C_1$-$C_{12}$-alkyl radical and a $C_6$-$C_{14}$-aryl radical,
the indices
n are identical or different and are each an integer from 2 to 4,
the indices
p are identical or different and are each an integer from 0 to 200,
the indices
q are identical or different and are each an integer from 0 to 20,
the indices
r are identical or different and are each an integer from 0 to 3,

and
g-iv) from 0.1 to 30 molpercent of the structural units of the general formula (V)

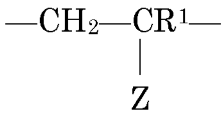

(V)

where

$R^1$ is as defined above,
Z is $-(CH_2)_q-O(C_nH_{2n}O)_p-R^{13}$,
n, p and q are as defined above,
the radicals $R^{13}$ are identical or different and are each hydrogen or a $C_1$-$C_4$-alkyl radical.

**12.** Dry mix according to any of Claims 1 to 11, containing

h) from 0.1 to 1.5 percent by weight of a watersoluble cationic copolymer comprising

h-i) from 5 to 60 molpercent of structural units of the general formula (VI),

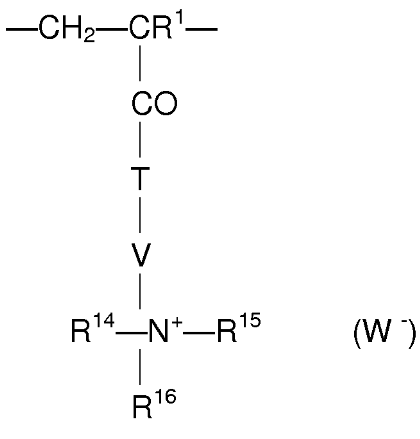

(VI)

where

$R^1$ is as defined above,
$R^{14}$ and $R^{15}$ are in each case identical or different and are each, independently of one another, hydrogen, an aliphatic hydrocarbon radical having from 1 to 20 carbon atoms, a cycloaliphatic hydrocarbon radical having from 5 to 8 carbon atoms or an aryl radical having from 6 to 14 carbon atoms,

the radicals

$R^{16}$ are identical or different and are each a substituent identical to $R^{14}$ or $R^{15}$,
$-(CH_2)_x-SO_3L_a$,

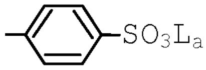

or

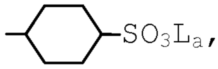

the ions

L are identical or different and are each a monovalent or divalent metal cation, ammonium cation or quaternary ammonium cation $(NR_1R_{14}R_{15}R_{16})^+$,

the indices

a are identical or different and are each ½ or 1,

the radicals

T are identical or different and are each oxygen, -NH or $-NR^{14}$,

the radicals

V are identical or different and are each
$-(CH_2)_m-$,

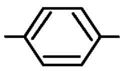

or

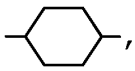

the indices

m are identical or different and are each an integer from 1 to 6,

the ions

$W^-$ are identical or different and are each a halogen atom, $C_1$-$C_4$-alkylsulphate or $C_1$-$C_4$-alkylsulphonate,

h-ii) from 20 to 59 molpercent of a structural unit having the general formulae (VIIa) and/or (VIIb):

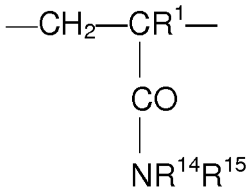

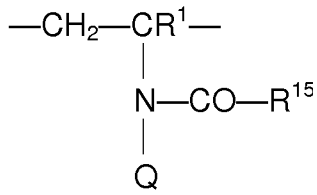

(VIIa) (VIIb)

where
the radicals

Q are identical or different and are each hydrogen or $-CHR^{14}R^{17}$,
$R^1$, $R^{14}$, $R^{15}$ are each as defined above, with the proviso that when Q is not hydrogen then $R^{14}$ and $R^{15}$ in the general formula (VIIb) can together form a $-CH_2-(CH_2)_y-$ methylene group so that the general formula (VIIb) represents the following structure:

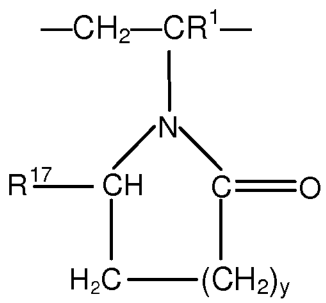

where the radicals
$R^{17}$ are identical or different and are each a hydrogen atom, a $C_1$-$C_4$-alkyl radical, a carboxylic acid group or a carboxylate group -cools, where the indices y are identical or different and are each an integer from 1 to 4, and L and a are each as defined above,

h-iii) from 0.01 to 3 molpercent of structural units of the general formula (VIII)

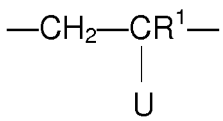

(VIII)

where
the radicals

U are identical or different and are each COO $(C_nH_{2n}O)_s-R^{18}$ or - $(CH_2)_q-O$ $(C_nH_{2n}O)_s-R^{18}$,

the indices

n are identical or different and are each an integer from 2 to 4,

the indices

s are identical or different and are each an integer from 1 to 200,

the indices

q are identical or different and are each an integer from 0 to 20,

the radicals

$R^{18}$ are identical or different and are each

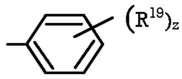

,

the radicals

$R^{19}$ are identical or different and are each hydrogen, a $C_1$-$C_6$-alkyl group or an arylalkyl group having a $C_1$-$C_{12}$-alkyl radical and a $C_6$-$C_{14}$-aryl radical,

the indices

z are identical or different and are each an integer from 1 to 3 and
$R^1$ is as defined above.

**13.** Building material mix containing a dry mix according to any of Claims 1 to 12 and water.

**14.** Use of the building material mix according to Claim 13 as joint filler for gypsum plasterboards in accordance with DIN 1168, as knifing filler in accordance with DIN 1168 and as plaster in accordance with DIN 18550.

**Revendications**

**1.** Mélange sec, **caractérisé en ce que** celui-ci contient

a) 10 à 98 pour cent en poids d'un liant à base de sulfate de calcium,
b) 0,5 à 7 pour cent en poids d'une poudre polymère redispersible,
c) 0,1 à 1,5 pour cent en poids d'un agent de rétention de l'eau à base de structures polysaccharides,
d) 0,01 à 2,0 pour cent en poids d'un retardateur de prise et soit
$e_a$) 0,02 à 2,0 pour cent en poids d'un copolymère anionique en poudre, le copolymère comprenant

$e_a$-i) 10 à 60 pour cent en moles d'unités structurales contenant des groupes acide sulfonique de formule générale (I)

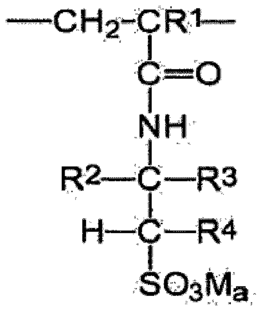

dans laquelle

$R^1$ est identique ou différent, et représenté par hydrogène et/ou un radical méthyle,
$R^2$, $R^3$, $R^4$ sont chacun identiques ou différents, et représentés indépendamment les uns des autres par hydrogène, un radical hydrocarboné aliphatique, ramifié ou non ramifié de 1 à 6 atomes C et/ou un radical hydrocarboné aromatique de 6 à 14 atomes C,
M est identique ou différent, et représenté par hydrogène, un cation métallique mono- ou bivalent et/ou

un ion ammonium,
a est identique ou différent, et représenté par ½ et/ou 1,

$e_a$-ii) 30 à 85 pour cent en moles d'unités structurales contenant des groupes (méth)acrylamido de formule générale (II)

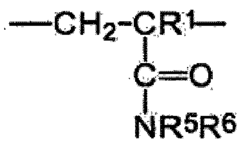

dans laquelle

$R^1$ a la signification indiquée précédemment,
$R^5$ et $R^6$ sont chacun identiques ou différents, et représentés chacun indépendamment l'un de l'autre par hydrogène, un radical hydrocarboné aliphatique ramifié ou non ramifié de 1 à 20 atomes C, un radical hydrocarboné cycloaliphatique de 5 à 8 atomes C et/ou un radical aryle de 6 à 14 atomes C,

$e_a$-iii) 0,03 à 1 pour cent en moles d'unités structurales dérivées de composés monomères qui comprennent plus d'un groupe vinyle éthyléniquement insaturé, polymérisable par voie radicalaire,

soit, en variante d'$e_a$)

$e_b$) 0,02 à 2,0 pour cent en poids d'un copolymère cationique en poudre, le copolymère comprenant

$e_b$-i) 10 à 60 pour cent en moles d'unités structurales cationiques comprenant un atome d'azote quaternisé, de formule générale (III)

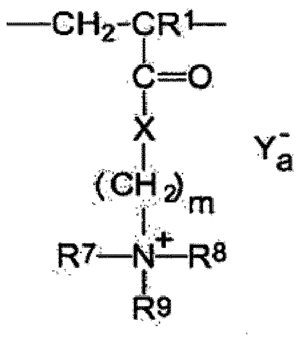

dans laquelle

$R^1$ a la signification indiquée précédemment,
$R^7$, $R^8$, $R^9$, $R^{10}$ sont chacun identiques ou différents, et représentés chacun indépendamment les uns des autres par hydrogène, un radical hydrocarboné aliphatique ramifié ou non ramifié de 1 à 20 atomes C, un radical hydrocarboné cycloaliphatique de 5 à 8 atomes C et/ou un radical aryle de 6 à 14 atomes C,
m est identique ou différent, et représenté par un nombre entier de 1 à 6,
X est identique ou différent, et représenté par oxygène et/ou N-$R^{10}$,
$Y^-_a$ est identique ou différent, et représenté par un halogénure, un sulfate d'alkyle en $C_1$ à $C_4$, un sulfonate d'alkyle en $C_1$ à $C_4$ et/ou un sulfate,
a est identique ou différent, et représenté par ½ et/ou 1,

$e_b$-ii) 30 à 85 pour cent en moles d'unités structurales contenant des groupes (méth)acrylamido de formule générale (II)

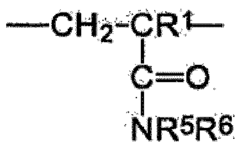

dans laquelle

$R^1$ a la signification indiquée précédemment,
$R^5$ et $R^6$ ont chacun les significations indiquées précédemment,

$e_b$-iii) 0, 03 à 1 pour cent en moles d'unités structurales dérivées de composés monomères qui comprennent plus d'un groupe vinyle éthyléniquement insaturé, polymérisable par voie radicalaire.

**2.** Mélange sec selon la revendication 1, **caractérisé en ce que** le liant se présente sous la forme d'un semi-hydrate de sulfate de calcium $\alpha$ et/ou d'un semi-hydrate de sulfate de calcium $\beta$.

**3.** Mélange sec selon les revendications 1 à 2, **caractérisé en ce que** le retardateur de prise est choisi dans le groupe constitué par l'acide citrique, un citrate, l'acide tartrique, un tartrate, l'acide malique, un malate, l'acide gluconique, un gluconate, le phosphate de calcium, les dérivés d'acides aminés synthétiques et les produits de décomposition et d'hydrolyse de protéines.

**4.** Mélange sec selon l'une quelconque des revendications 1 à 3, **caractérisé en ce que** la poudre polymère redispersible se présente sous la forme d'un polymère d'acétate de vinyle, d'un copolymère acétate de vinyle-éthylène, d'un copolymère acétate de vinyleester de vinyle et/ou d'un copolymère acétate de vinyle-ester de vinyle-éthylène, les monomères ester de vinyle étant à chaque fois choisis dans le groupe constitué par le laurate de vinyle, le pivalate de vinyle et le versatate de vinyle, ainsi que sous la forme d'un copolymère acétate de vinyle-ester de l'acide acrylique, d'un copolymère acétate de vinyleester de l'acide acrylique-éthylène, d'un copolymère styrène-butadiène et d'un copolymère styrène-ester de l'acide acrylique, les esters de l'acide acrylique étant à chaque fois des esters avec des alcools ramifiés ou non ramifiés contenant 1 à 10 atomes C.

**5.** Mélange sec selon l'une quelconque des revendications 1 à 4, **caractérisé en ce que** l'agent de rétention de l'eau à base de structures polysaccharides se présente sous la forme de méthylhydroxyéthylcellulose et/ou de méthylhydroxypropylcellulose.

**6.** Mélange sec selon l'une quelconque des revendications 1 à 5, **caractérisé en ce que** les unités structurales contenant des groupes acide sulfonique de formule générale (I) du copolymère anionique dérivent d'acide 2-acrylamido-2-méthylpropanesulfonique et/ou de ses sels.

**7.** Mélange sec selon l'une quelconque des revendications 1 à 5, **caractérisé en ce que** les unités structurales cationiques, comprenant un atome d'azote quaternisé, de formule générale (III) du copolymère cationique dérivent de sels de [3-(méthacryloylamino)-propyl]-triméthylammonium et/ou de [3-(acryloylamino)-propyl]-triméthylammonium.

**8.** Mélange sec selon l'une quelconque des revendications 1 à 7, **caractérisé en ce que** les unités structurales contenant des groupes (méth)acrylamido de formule générale (II) dérivent d'acrylamide, de méthacrylamide, de méthylacrylamide et/ou de N,N-diméthylacrylamide.

**9.** Mélange sec selon l'une quelconque des revendications 1 à 8, **caractérisé en ce que** les unités structurales dérivées de composés monomères qui comprennent plus d'un composé vinyle éthyléniquement insaturé dérivent d'isocyanurate de triallyle, de triallylamine, de N,N'-méthylènebisacrylamide et/ou de N,N'-méthylènebisméthacrylamide.

**10.** Mélange sec selon l'une quelconque des revendications 1 à 9, contenant

f) 0,0005 à 0,05 pour cent en poids d'un copolymère contenant des groupes (méth)acrylamido qui ne contient pas d'unités structurales dérivées de composés monomères contenant plus d'un groupe vinyle éthyléniquement insaturé polymérisable par voie radicalaire, et comprenant

f-i) 60 à 100 pour cent en moles d'unités structurales de formule générale (II)

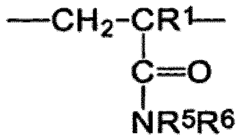

dans laquelle

$R^1$ a la signification indiquée précédemment,
$R^5$ et $R^6$ sont chacun identiques ou différents, et représentés chacun indépendamment l'un de l'autre par hydrogène, un radical hydrocarboné aliphatique ramifié ou non ramifié de 1 à 20 atomes C, un radical hydrocarboné cycloaliphatique de 5 à 8 atomes C et/ou un radical aryle de 6 à 14 atomes C.

**11.** Mélange sec selon l'une quelconque des revendications 1 à 10, contenant

g) 0,1 à 1,5 pour cent en poids d'un copolymère soluble dans l'eau contenant des groupes sulfo, comprenant

g-i) 3 à 96 pour cent en moles d'unités structurales de formule générale (I)

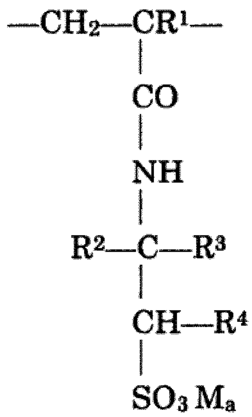

(I)

dans laquelle

$R^1$ a la signification indiquée précédemment,
$R^2$, $R^3$, $R^4$ ont chacun les significations indiquées précédemment,
M et a ont les significations indiquées précédemment,

g-ii) 3 à 59 pour cent en moles d'unités structurales de formule générale (II)

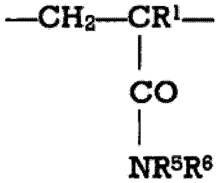

(II)

dans laquelle

$R^1$ a la signification indiquée précédemment,

$R^5$ et $R^6$ ont chacun les signification indiquées précédemment

et au moins une unité structurale supplémentaire choisie parmi
g-iii) 0,001 à 10 pour cent en moles d'unités structurales de formule générale (IV)

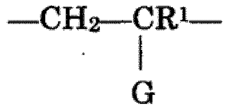

(IV)

dans laquelle

$R^1$ a la signification indiquée précédemment,
G est identique ou différent, et représenté par - $COO(C_nH_{2n}O)_p$-$R^{11}$ et/ou -$(CH_2)_q$-$O(C_nH_{2n}O)_p$-$R^{11}$,
$R^{11}$ est identique ou différent, et représenté par

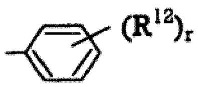

et/ou un radical alkyle aliphatique insaturé ou saturé, linéaire ou ramifié, de 10 à 40 atomes C,
$R^{12}$ est identique ou différent, et représenté par hydrogène, un groupe alkyle en $C_1$ à $C_6$, un groupe arylalkyle contenant un radical alkyle en $C_1$ à $C_{12}$ et un radical aryle en $C_6$ à $C_{14}$,
n est identique ou différent, et représenté par un nombre entier de 2 à 4,
p est identique ou différent, et représenté par un nombre entier de 0 à 200,
q est identique ou différent, et représenté par un nombre entier de 0 à 20,
r est identique ou différent, et représenté par un nombre entier de 0 à 3,
et

g-iv) 0,1 à 30 pour cent en moles des unités structurales de formule générale (V)

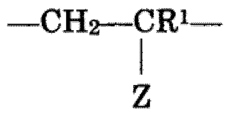

(V)

dans laquelle

$R^1$ a la signification indiquée précédemment,
Z est représenté par -$(CH_2)_q$-$O(C_nH_{2n}O)_p$-$R^{13}$,
n, p et q ont les significations indiquées précédemment,
$R^{13}$ est identique ou différent, et représenté par hydrogène et/ou un radical alkyle en $C_1$ à $C_4$.

**12.** Mélange sec selon l'une quelconque des revendications 1 à 11, contenant

h) 0,1 à 1,5 pour cent en poids d'un copolymère cationique soluble dans l'eau, comprenant

h-i) 5 à 60 pour cent en moles d'unités structurales de formule générale (VI)

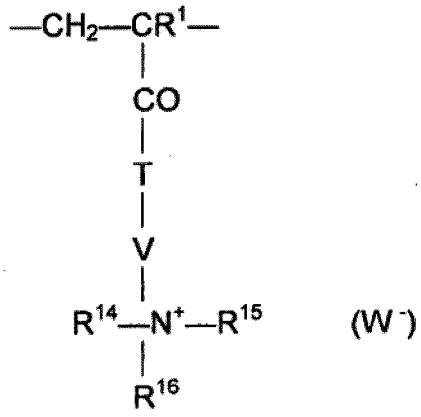

(VI)

dans laquelle

$R^1$ a la signification indiquée précédemment,
$R^{14}$ et $R^{15}$ sont chacun identiques ou différents, et représentés chacun indépendamment l'un de l'autre par hydrogène, un radical hydrocarboné aliphatique de 1 à 20 atomes C, un radical hydrocarboné cycloaliphatique de 5 à 8 atomes C et/ou un radical aryle de 6 à 14 atomes C,
$R^{16}$ est identique ou différent, et représenté par un substituant identique à $R^{14}$ ou $R^{15}$, $-(CH_2)_x-SO_3L_a$,

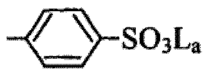

et/ou

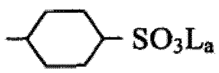

,

L est identique ou différent, et représenté par un cation métallique mono- ou bivalent, un cation ammonium et/ou un cation ammonium quaternaire $(NR_1R_{14}R_{15}R_{16})^+$,
a est identique ou différent, et représenté par ½ et/ou 1,
T est identique ou différent, et représenté par oxygène, -NH et/ou $-NR^{14}$,
V est identique ou différent, et représenté par $-(CH_2)_m-$,

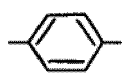

et/ou

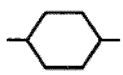

,

m est identique ou différent, et représenté par un nombre entier de 1 à 6,
$W^-$ est identique ou différent, et représenté par un atome d'halogène, un sulfate d'alkyle en $C_1$ à $C_4$ et/ou un sulfonate d'alkyle en $C_1$ à $C_4$,

h-ii) 20 à 59 pour cent en moles d'une unité structurale représenté par les formules générales (VIIa) et/ou (VIIb) suivantes :

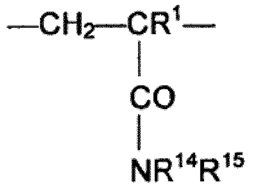

(VIIa)

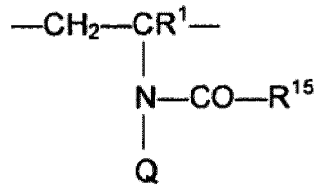

(VIIb)

dans lesquelles

Q est identique ou différent, et représenté par hydrogène et/ou $-CHR^{14}R^{17}$,
$R^1$, $R^{14}$, $R^{15}$ ont chacun les significations indiquées précédemment à condition que lorsque Q est différent de l'hydrogène, $R^{14}$ et $R^{15}$ dans la formule générale (VIIb) puissent représenter ensemble un groupe méthylène $-CH_2-(CH_2)_y-$, de manière à ce que la formule générale (VIIb) présente la structure suivante :

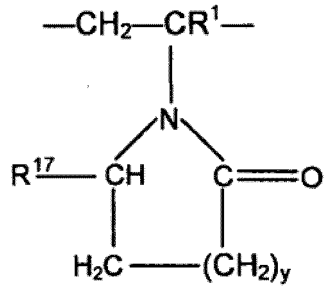

dans laquelle
$R^{17}$ est identique ou différent, et représenté par un atome d'hydrogène, un radical alkyle en $C_1$ à $C_4$, un groupe acide carboxylique et/ou un groupe carboxylate - $COOL_a$, y étant identique ou différent et représenté par un nombre entier de 1 à 4, et L et a ayant chacun les significations indiquées précédemment,

h-iii) 0,01 à 3 pour cent en moles d'unités structurales de formule générale (VIII)

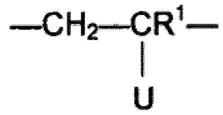

(VIII)

dans laquelle

U est identique ou différent, et représenté par - $COO(C_nH_{2n}O)_s-R^{18}$ et/ou - $(CH_2)_q-O(C_nH_{2n}O)_s-R^{18}$
n est identique ou différent, et représenté par un nombre entier compris entre 2 et 4,
s est identique ou différent, et représenté par un nombre entier compris entre 1 et 200,
q est identique ou différent, et représenté par un nombre entier compris entre 0 et 20,
$R^{18}$ est identique ou différent, et représenté par

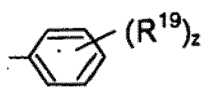

,

$R^{19}$ est identique ou différent, et représenté par hydrogène, un groupe alkyle en $C_1$ à $C_6$ et/ou un groupe arylalkyle contenant un radical alkyle en $C_1$ à $C_{12}$ et un radical aryle en $C_6$ à $C_{14}$,

z est identique ou différent, et représenté par un nombre entier compris entre 1 et 3, et
$R^1$ a la signification indiquée précédemment.

**13.** Mélange de matériau de construction, contenant un mélange sec selon l'une quelconque des revendications 1 à 12 et de l'eau.

**14.** Utilisation du mélange de matériau de construction selon la revendication 13 en tant que masse de remplissage pour joint pour plaques de gypse selon DIN 1168, en tant qu'enduit selon DIN 1168 et en tant que crépi selon DIN 18550.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 4331141 A
- US 2003144386 A
- US 6187887 B
- EP 0303071 A1
- US 4857610 A


### In der Beschreibung aufgeführte Nicht-Patentliteratur


- **R. BAYER ; H. LUTZ.** Dry Mortars, Ullmann's Encyclopedia of Industrial Chemistry. Wiley-VCH, 2003, vol. 11, 83-108
- **FRANZ WIRSCHING.** Calcium sulfate, Ullmann's Encyclopedia of Industrial Chemistry. Wiley-VCH, 2003, vol. 6, 89-121
- **F. BUCHHOLZ ; A. GRAHAM.** Modern Superabsorber Technology. John Wiley & Sons Inc, 1989, 55-67